# EUROPÄISCHE PATENTSCHRIFT

(11) **EP 1 941 674 B1**
(45) Veröffentlichungstag und Bekanntmachung des Hinweises auf die Patenterteilung: **29.12.2010**
(21) Anmeldenummer: 06806964.0
(22) Anmeldetag: 04.10.2006
(51) Int. Cl.: H04L 12/56, G06F 13/28

(54) **TEILNEHMER UND KOMMUNIKATIONSCONTROLLER EINES KOMMUNIKATIONSSYSTEMS UND VERFAHREN ZUR REALISIERUNG EINER GATEWAY-FUNKTIONALITÄT IN EINEM TEILNEHMER EINES KOMMUNIKATIONSSYSTEMS**
SUBSCRIBER AND COMMUNICATION CONTROLLER OF A COMMUNICATION SYSTEM AND METHOD FOR IMPLEMENTING A GATEWAY FUNCTIONALITY IN A SUBSCRIBER OF A COMMUNICATION SYSTEM
ABONNE ET CONTROLEUR DE COMMUNICATION D'UN SYSTEME DE COMMUNICATION ET PROCEDE POUR METTRE EN OEUVRE UNE FONCTIONNALITE DE PASSERELLE CHEZ UN ABONNE D'UN SYSTEME DE COMMUNICATION

(30) Priorität: 06.10.2005 DE 102005048585
(43) Veröffentlichungstag der Anmeldung: 09.07.2008
(73) Patentinhaber: ROBERT BOSCH GMBH, 70442 Stuttgart (DE)
(72) Erfinder: IHLE, Markus, 72127 Jettenburg (DE); TAUBE, Jan, 72760 Reutlingen (DE); LORENZ, Tobias, 72766 Reutlingen (DE)
(86) Internationale Anmeldenummer: PCT/EP2006/067029
(87) Internationale Veröffentlichungsnummer: WO 2007/039622

(56) Entgegenhaltungen:
- EP-A- 1 574 965
- RALPH BELSCHNER ET AL: "FLEXRAY REQUIREMENTS SPECIFICATION" INTERNET CITATION, [Online] 16. Mai 2002 (2002-05-16), XP002270307 Gefunden im Internet: URL:www.informatik.uni-ulm.de/rs/projekte/ core/rts1/> [gefunden am 2004-02-13]
- DIELISSEN J ET AL: "Concepts and Implementation of the Philips Network-on-Chip" INTERNET CITATION, [Online] 13. November 2003 (2003-11-13), XP002330547 Gefunden im Internet: URL:http://www.homepages.inf.ed.ac/kgoosse n/2003-ipsoc.pdf> [gefunden am 2005-06-06]

## Beschreibung

Die vorliegende Erfindung betrifft einen Teilnehmer (sog. Host) eines Kommunikationssystems. Der Teilnehmer weist einen Mikroprozessor, mindestens zwei Kommunikationscontroller und einen Peripherie-Bus auf. Der Mikroprozessor steht über den Peripherie-Bus mit den Kommunikationscontrollern in Verbindung und ist über die Kommunikationscontroller jeweils an eine Kommunikationsverbindung des Kommunikationssystems angeschlossen, über welche Botschaften übertragen werden.

Die Erfindung betrifft außerdem einen Kommunikationscontroller (sog. Communication Controller; CC) eines Teilnehmers (sog. Host) eines Kommunikationssystems. Der Teilnehmer weist einen Mikroprozessor, den Kommunikationscontroller, optional weitere Kommunikationscontroller und einen Peripherie-Bus auf. Der Kommunikationscontroller steht einerseits über den Peripherie-Bus mit dem Mikroprozessor in Verbindung und ist andererseits an eine Kommunikationsverbindung des Kommunikationssystems angeschlossen, über welche Botschaften übertragen werden.

Schließlich betrifft die vorliegende Erfindung auch ein Verfahren zur Realisierung einer Gateway-Funktionalität innerhalb eines Teilnehmers (sog. Host) eines Kommunikationssystems. Der Teilnehmer weist einen Mikroprozessor, mindestens zwei Kommunikationscontroller und einen Peripherie-Bus auf. Die Kommunikationscontroller stehen einerseits über den Peripherie-Bus mit dem Mikroprozessor in Verbindung und sind andererseits jeweils an eine Kommunikationsverbindung des Kommunikationssystems angeschlossen, über welche Botschaften übertragen werden.

### Stand der Technik

Die Vernetzung von Steuergeräten, Sensorik und Aktuatorik mit Hilfe eines Kommunikationssystems und einer als Bussystem ausgebildeten Kommunikationsverbindung hat in den letzten Jahren bei modernen Kraftfahrzeugen aber auch im Maschinenbau, insbesondere im Werkzeugmaschinenbereich, und im Bereich der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Teilnehmern findet mehr und mehr über ein als Bussystem ausgebildetes Kommunikationssystem statt. Der Kommunikationsverkehr auf dem Bussystem, Zugriffs- und Empfangsmechanismen sowie Fehlerbehandlung werden über ein Protokoll geregelt.

Ein bekanntes Protokoll hierzu ist das FlexRay-Protokoll, wobei im Augenblick die FlexRay-Protokollspezifikation v2.0 zugrunde liegt. Das FlexRay-Protokoll definiert ein schnelles, deterministisches und fehlertolerantes Bussystem, insbesondere für den Einsatz in einem Kraftfahrzeug. Die Datenübertragung gemäß dem FlexRay-Protokoll erfolgt nach einem Time Division Multiple Access

(TDMA)-Verfahren. Die Datenübertragung über die Kommunikationsverbindung erfolgt in sich regelmäßig wiederholenden Übertragungszyklen, die jeweils in mehrere Datenrahmen, die auch als Zeitschlitze bezeichnet werden, unterteilt ist. Den Teilnehmern bzw. den zu übertragenden Botschaften sind feste Zeitschlitze zugewiesen, in denen sie einen exklusiven Zugriff auf die Kommunikationsverbindung haben. Die Zeitschlitze wiederholen sich in den festgelegten Übertragungszyklen, so dass der Zeitpunkt, zu dem eine Botschaft über den Bus übertragen wird, exakt vorausgesagt werden kann und der Buszugriff deterministisch erfolgt.

Um die Bandbreite für die Botschaftsübertragung auf dem Bussystem optimal zu nutzen, unterteilt FlexRay den Übertragungszyklus, der auch als Zyklus oder Buszyklus bezeichnet werden kann, in einen statischen und einen dynamischen Teil. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit, für einen oder mehrere so genannte Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird.

FlexRay kommuniziert über zwei physikalisch getrennte Leitungen der Kommunikationsverbindung mit einer Datenrate von je maximal 10 MBit/s (10 MBaud). Dabei ist alle 5 ms, bei manchen Kommunikationssystemen sogar alle 1 ms oder 2,5 ms ein Buszyklus abgeschlossen. Die beiden Kanäle entsprechen dabei der physikalischen Schicht, insbesondere des OSI (Open System Architecture) Schichtenmodells. Die beiden Kanäle dienen hauptsächlich der redundanten und damit fehlertoleranten Übertragung von Botschaften, können jedoch auch unterschiedliche Botschaften übertragen, wodurch sich dann die Datenrate verdoppeln würde. FlexRay kann aber auch mit niedrigeren Datenraten betrieben werden.

Um synchrone Funktionen zu realisieren und die Bandbreite durch kleine Abstände zwischen zwei Botschaften zu optimieren benötigen die Teilnehmer bzw. die verteilten Komponenten im Kommunikationsnetzwerk eine gemeinsame Zeitbasis, die so genannte globale Zeit. Für die Uhrsynchronisation werden Synchronisationsnachrichten im statischen Teil des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

Ein FlexRay-Teilnehmer, der auch als FlexRay-Netzknoten oder Host bezeichnet werden kann, enthält einen Teilnehmer- oder Host-Prozessor, einen FlexRay-oder Kommunikations-Controller sowie bei einer Busüberwachung einen so genannten Busguardian. Dabei liefert und verarbeitet der Teilnehmerprozessor die Daten, die über den FlexRay-Kommunikationscontroller und die FlexRay-Kommunikationsverbindung übertragen werden. Für die Kommunikation in einem FlexRay-Netzwerk können Botschaften bzw. Botschaftsobjekte mit z.B. bis zu 254 Datenbytes konfiguriert werden.

Zur Kopplung einer FlexRay-Kommunikationsverbindung, über die Botschaften übertragen werden, mit einem FlexRay-Teilnehmer wird in der DE 10 2005 034 744, die zum Anmeldetag der vorliegenden Erfindung noch nicht veröffentlich war, ein FlexRay-Kommunikationsbaustein eingesetzt, der über eine Teilnehmerschnittstelle an dem Teilnehmer und über eine andere Verbindung an der Kommunikationsverbindung angeschlossen ist. Dabei ist zur Übertragung der Botschaften zwischen dem Teilnehmer und der Kommunikationsverbindung in dem Kommunikationsbaustein eine Anordnung zur Speicherung der Botschaften vorgesehen. Die Übertragung wird durch eine Zustandsmaschine gesteuert. Der FlexRay-Kommunikafionsbaustein kann integraler Bestandteil des FlexRay-Kommunikationscontrollers oder als ein separates Bauteil ausgebildet sein.

In dem Kommunikationsbaustein ist ein Schnittstellenbaustein bestehend aus zwei Teilen vorgesehen, wobei der eine Teilbaustein teilnehmerunabhängig und der andere Teilbaustein teilnehmerspezifisch ist. Der teilnehmerspezifische oder kundenspezifische Teilbaustein, der auch als Customer CPU Interface (CIF) bezeichnet wird, verbindet einen kundenspezifischen Teilnehmer in Form einer teilnehmerspezifischen Host-CPU mit dem FlexRay-Kommunikationsbaustein. Der teilnehmerunabhängige Teilbaustein, der auch als Generic CPU Interface (GIF) bezeichnet wird, stellt ein generisches, also allgemeines, CPU-Interface dar, über das sich mittels entsprechender teilnehmerspezifischer Teilbausteine, also Customer CPU Interfaces (CIFs), unterschiedliche kundenspezifische Host-CPUs an den FlexRay-Kommunikationsbaustein anschließen lassen. Dadurch ist eine problemlose Anpassung des Kommunikationsbausteins an unterschiedliche Teilnehmer möglich, da abhängig vom Teilnehmer nur der teilnehmerspezifische Teilbaustein variiert werden muss, während der teilnehmerunabhängige Teilbaustein und der restliche Kommunikationsbaustein stets gleich ausgebildet werden kann. Mit Hilfe des Kommunikationsbausteins ergibt sich also eine Standard-Schnittstelle zum Anschluss beliebiger FlexRay-Teilnehmer an eine FlexRay-Kommunikationsverbindung, wobei sich die Schnittstelle durch einfache Variation des teilnehmerspezifischen Teilbausteins an beliebig ausgebildete oder geartete Teilnehmer flexibel anpassen lässt. Dabei können die Teilbausteine auch innerhalb des einen Schnittstellenbausteins jeweils in Software, also jeder Teilbaustein als Softwarefunktion, realisiert werden.

Die Zustandsmaschine in dem FlexRay-Kommunikationsbaustein kann fest in Hardware verdrahtet sein. Alternativ kann die Zustandsmaschine im Kommunikationsbaustein über die Teilnehmerschnittstelle durch den Teilnehmer auch frei programmierbar sein.

Nach dem Stand der Technik ist der Botschaftsspeicher des FlexRay-Kommunikationsbausteins vorzugsweise als single-ported RAM (Random Access Memory) ausgeführt. Dieser RAM-Speicher speichert die Botschaften bzw. Botschaftsobjekte, also die eigentlichen Nutzdaten, zusammen mit Konfigurations- und Statusdaten. Die genaue Struktur des Botschaftsspeichers des bekannten Kommunikationsbausteins kann der genannten Druckschrift DE 10 2005 034 744 entnommen werden.

Nach dem Stand der Technik ist innerhalb des Teilnehmers der Mikrocontroller, der den Mikroprozessor (sog. Host-CPU), einen Speicher (z.B. Random Access Memory; RAM) und einen Core-Bus zwischen dem Mikroprozessor und dem Speicher umfasst, über eine passive und eine aktive Schnittstelle als sog. Master an den Peripherie-Bus angeschlossen. Über die passive Schnittstelle kann der Mikrocontroller lediglich Befehle und Daten von anderen Teilnehmern des Peripherie-Busses empfangen. Über die aktive Schnittstelle kann der Mikrocontroller selbst Daten und Befehle an andere Teilnehmer des Peripherie-Busses aussenden. Ein Anschluss eines Teilnehmers an den Peripherie-Bus über eine passive Schnittstelle ist gleichbedeutend mit einem Anschluss des Teilnehmers als sog. Slave. Ein Anschluss eines Teilnehmers über eine aktive Schnittstelle entspricht einen Anschluss des Teilnehmers als sog. Master. Bei einem bekannten Kommunikationssystem ist ein Kommunikationscontroller ist über eine passive Schnittstelle als sog. Slave an den Peripheriebus angeschlossen.

Die Kommunikationscontroller stellen die Verbindung des Teilnehmers zu einer oder mehreren Kommunikationsverbindungen (z.B. CAN, TTCAN, MOST, FlexRay, ByteFlight, etc.) dar. Sie besitzen jeweils einen Botschaftsspeicher, in dem von der Kommunikationsverbindung neu empfangene Botschaften abgelegt und auf der Kommunikationsverbindung zu versendende Botschaften ausgelesen werden. Der Mikroprozessor (Host-CPU) kann über die passive Schnittstelle des Kommunikationscontrollers auf die gespeicherten Botschaftsobjekte zugreifen.

Der Mikroprozessor konfiguriert, kontrolliert und steuert den Kommunikations-controller. Der Mikroprozessor liest empfangene Botschaften aus, bewertet sie, berechnet neue Botschaften und sorgt für das Schreiben der Botschaften zum Versand über die Kommunikationsverbindung. Zur Datenübertragung innerhalb des Teilnehmers überträgt der Mikroprozessor die Daten wortweise aus dem Kommunikationscontroller in den Speicher des Mikrocontrollers. Dabei treten bei den heute üblichen hohen Taktraten des Mikroprozessors mehrere Wartezyklen auf, während denen der Mikroprozessor auf das Ende der Datenübertragung wartet und keinen anderen Aufgaben nachgehen kann.

Bei einfachen Gateway-Operationen ist es oftmals nur erforderlich, die empfangenen Daten aus einem Kommunikationscontroller des Teilnehmers auszulesen und in einen oder mehrere andere Kommunikationscontroller des Teilnehmers zum Versand zu schreiben. Wird kein DMA (Direct Memory Access)-Controller verwendet, so transferiert der Mikroprozessor (die Host-CPU) die Daten wortweise aus den Kommunikationscontrollern in ein dem Mikroprozessor zugeordnetes Speicherelement oder in ein CPU-internes Speicherelement, um sie gegebenenfalls zu bearbeiten und anschließend in die entsprechenden Kommunikationscontroller zu kopieren. Dabei treten bei den heute üblichen hohen Taktraten des Mikroprozessors (der Host-CPU) mehrere Wartezyklen auf, während denen der Mikroprozessor blockiert ist und keine anderen Aufgaben erfüllen kann.

Der Mikroprozessor konfiguriert, kontrolliert und steuert den mindestens einen Kommunikationscontroller bzw. die darin enthaltene Logik sowie die Konfigurationsdaten der aktiven Schnittstelle. Der Mikroprozessor liest bereits in dem Botschaftsspeicher des Kommunikationscontrollers empfangene und automatisch in das Speicherelement des Mikroprozessors kopierte Botschaftsobjekte aus, bewertet bzw. bearbeitet sie, berechnet neue Botschaftsobjekte und legt diese im Speicherelement des Mikroprozessors ab. Außerdem werden Informationen an die entsprechenden Kommunikafionscontroller übermittelt, damit diese die aktuellen Daten aus dem Speicherelement des Mikroprozessors in ihren eigenen Botschaftsspeicher transferieren können.

Es ist ebenfalls bekannt, zur Entlastung des Mikroprozessors des Mikrocontrollers eines Teilnehmers des Kommunikationssystems einen DMA-Controller über eine passive und eine aktive Schnittstelle als sog. Master an den Peripheriebus anzuschließen. Der DMA-Controller kann den Datentransfer zwischen dem Speicherelement des Mikrocontrollers und dem Kommunikationscontroller durchführen. Er wird dazu von dem Mikroprozessor (Host-CPU) konfiguriert und gestartet. Danach überträgt der DMA-Controller Daten wortweise aus dem Kommunikationscontroller in das Speicherelement des Mikrocontrollers oder - sofern diese Funktion unterstützt wird - direkt zwischen den Kommunikationscontrollern. Das Ende der Datenübertragung wird dem Mikroprozessor mittels eines Interrupts mitgeteilt, woraufhin der Mikroprozessor den Prozess für die nächste Botschaft neu beginnt. Das Abarbeiten von Interrupts erzeugt eine große Anzahl von CPU-Befehlen, durch die ein großer Teil der Rechen- und Speicherressourcen des Mikroprozessors gebunden ist. Außerdem steigt durch häufige Interrupts der mögliche Jitter (zeitliche Unsicherheit bzgl. der Ausführungsdauer) von unterbrochenen Software-Tasks an.

Der vorliegenden Erfindung liegt deshalb die Aufgabe zugrunde, die Gateway-Funktionalität innerhalb eines Teilnehmers eines Kommunikationssystems zu optimieren, insbesondere soll beim Routing von Botschaften zwischen den Kommunikationscontrollern eines Teilnehmers die Anzahl der Wartezyklen in dem Mikroprozessor des Teilnehmers und die Interruptlast verringert werden.

Zur Lösung dieser Aufgabe wird ausgehend von der Teilnehmer der eingangs genannten Art vorgeschlagen, dass mindestens einer der Kommunikationscontroller eine aktive Schnittstelle, über die der Kommunikationscontroller mit dem Peripherie-Bus in Verbindung steht, und eine Logik zur selbstständigen Realisierung einer Gateway-Funktionalität aufweist.

### Vorteile der Erfindung

Erfindungsgemäß wird vorgeschlagen, den Kommunikationscontroller nicht als sog. Slave, sondern als Master an den Peripherie-Bus anzuschließen. Zusätzlich erhält der Kommunikationscontroller eine Intelligenz in Form einer Logik, die es ihm ermöglicht, eine Gateway-Funktionalität zwischen einem Botschaftsspeicher des Kommunikationscontrollers und einem Speicher des Mikrocontrollers bzw. zwischen Botschaftsspeichern mehrerer Kommunikationscontroller selbstständig zu koordinieren und zu steuern. Durch die Logik kann dem Kommunikationscontroller eine gewisse DMA-Funktionalität vermittelt werden.

Erfindungsgemäß wird also der Datentransfer zwischen dem Mikrocontroller (Host-CPU) des Teilnehmers und einem Botschaftsspeicher eines Kommunikationscontrollers, sowie zwischen Botschaftsspeichern mehrerer Kommunikationscontroller durch Hinzufügen einer aktiven Schnittstelle optimiert. Dabei werden insbesondere spezifische Gateway-Funktionen, wie bspw. zeitgesteuerter oder ereignisgesteuerter Datentransfer, unterstützt. Die Übertragung der Botschaften durch die Kommunikatinscontroller wird nach entsprechender Konfiguration durch den Mikroprozessor (Host-CPU) des Teilnehmers weitgehend selbstständig abgewickelt. Das erfindungsgemäße Verfahren reduziert bzw. vermeidet die bisher hohe Auslastung des Mikroprozessors (Host-CPU) durch Wartezyklen und Interrupts, da die Nachrichten über die aktive Schnittstelle direkt transferiert werden können.

Die Erfindung kann bei beliebigen Teilnehmern von beliebigen Kommunikationssystemen eingesetzt werden. Nachfolgend wird die Erfindung beispielhaft anhand eines FlexRay-Kommunikationssytems beschrieben. Dieser Bezug zu dem FlexRay-Protokoll soll jedoch nicht beschränkend verstanden werden. Selbstverständlich kann die Erfindung auch in Teilnehmern eines MOST (Media Oriented Systems Transport)-, eines CAN (Controller Area Network)-, eines TTCAN (Time Triggered CAN)-, eines LIN (Local Interconnect Network)-oder eines beliebig anderen bekannten Kommunikationssystems eingesetzt werden.

Zusätzlich zur passiven Schnittstelle verfügt der erfindungsgemäße Kommunikationscontroller über eine aktive Schnittstelle, über die eine im Kommunikationscontroller eingebettete Logik selbstständig sowohl Botschaftsobjekte aus dem Botschaftsspeicher des Kommunikationscontrollers auslesen und in einen Speicher eines entsprechenden Ziels (Speicherelement des Mikroprozessors oder Botschaftsspeicher eines Kommunikationscontrollers) schreiben als auch Botschaftsobjekte aus einer Quelle (Speicherelement des Mikroprozessors oder Botschaftsspeicher eines Kommunikationscontrollers) auslesen und in den Botschaftsspeicher des erfindungsgemäßen Kommunikationscontrollers schreiben kann. Selbstverständlich ist es denkbar, dass nicht nur einer, sondern mehrere Kommunikationscontroller eines Teilnehmers in der erfindungsgemäßen Weise ausgestaltet sind. Es ist für die Erfindung nicht erforderlich, dass alle Module (Kommunikationscontroller) eine aktive Schnittstelle besitzen. Das aktive Interface ist derart ausgelegt, dass es selbstständig (ohne Triggerung durch einen steuernden Mikrocontroller oder andere steuernde Einheiten) Daten von anderen Modulen anfordern kann.

Eine bevorzugte Gateway-Funktionalität, die von dem erfindungsgemäßen Kommunikationscontroller bzw. von dessen Logik realisiert wird, ist bspw. das Routing (Weiterleiten) von eingehenden Botschaften innerhalb des Netzes (bestehend aus dem Peripherie-Bus, dem Mikroprozessor, den Kommunikationscontrollern und evtl. weiteren Modulen). Grundsätzlich sind verschiedene Routing-Verfahren denkbar, von denen nachfolgend einige näher erläutert werden.

Statisches Routing:
Dieses Verfahren ist nicht adaptiv, sehr einfach und daher viel benutzt. Jeder Knoten (Kommunikationscontroller) unterhält eine Tabelle mit einer Zeile für jeden möglichen Zielknoten. Eine Zeile enthält n Einträge, mit dem besten, zweitbesten usw. Übertragungsweg für dieses Ziel zusammen mit einer Gewichtung. Vor Weiterleitung eines Datenpaketes wird der entsprechende Eintrag aus der Tabelle gewählt und auf eine der möglichen Leitungen gegeben. Die Gewichtung spiegelt hier die Wahrscheinlichkeit, dass diese Leitung gewählt wird, wider.

Zentralisiertes Routing:
Zentralisiertes Routing stellt ein adaptives Verfahren dar. Es existiert im Netz ein Routing Control Center (RCC), an welches jeder Knoten periodisch Zustandsinformationen sendet. Die Zustandsinformationen betreffen z.B. eine Liste aller aktiven Nachbarknoten, aktuelle Warteschlangenlänge, Umfang an Verkehr seit letzter Meldung, etc. Das RCC sammelt die Zustandinformationen und berechnet aufgrund dieser Kenntnis über das gesamte Netz die optimale Weglänge zwischen allen Knoten. Danach übermittelt das RCC jedem Knoten eine Routingtabelle, anhand der der Knoten seine Routing-Entscheidungen trifft. Die Funktion des RCC kann von dem erfindungsgemäßen Kommunikationscontroller bzw. seiner Logik übernommen werden.

Vorteil:
- Das RCC hat theoretisch die vollständige Übersicht und kann somit 'perfekte' Entscheidungen treffen;
- Knoten müssen keine aufwendigen Berechnungen durchführen;
- Entlastung des Mikroprozessors des Teilnehmers, da die Funktion des RCC zumindest teilweise von einem oder mehreren Kommunikationscontrollern bzw. ihren Logiken übernommen wird.

Nachteil:
- Berechnung dauert für große Netze u. U. sehr lange;
- Ausfall des RCC lähmt das ganze Netz (sofern kein Back-up Rechner vorhanden bzw. definiert wurde);
- globale Inkonsistenzen möglich, da Knoten nahe am RCC wesentlich früher die neuen Routingtabellen erhalten als die weiter entfernten;
- starke Belastung des RCC durch die zentrale Funktion.

Isoliertes Routing

Bei diesem Routingverfahren entscheidet jeder Knoten nur auf Grund der Informationen, die er selber sammelt bzw. gesammelt hat. Es findet kein Austausch von Routing-Informationen zwischen den Knoten statt. Die Anpassung an Änderungen des Verkehrs oder der Topologie des Netzes (z.B. durch Ausfall oder Hinzufügen von Knoten) kann hier also nur in beschränktem Umfang erfolgen, ist aber grundsätzlich ohne besonders großen Aufwand möglich. Zu den isolierten Routing-Verfahren zählen:
- Broadcast Routing
- Hot Potato
- Backward Learning
- Delta- Routing

### Broadcast Routing

Beim Broadcast Routing wird ein Paket an alle Knoten gesendet. Hierbei unterscheiden sich zwei Varianten: Einmal dass für jeden Knoten ein gesondertes Paket erstellt wird und zum anderen das Fluten, bei dem das gleiche Paket an jeden Knoten übermittelt wird. Das Fluten ist hierbei das einfachste Verfahren und ist nicht adaptiv. Jedes eingehende Paket wird auf jeder Übertragungsleitung weitergegeben, außer auf derjenigen, auf welcher es eintraf. Hierbei können auch Maßnahmen zur Eindämmung der Flut getroffen werden, wie:
- Erkennung von Duplikaten von Paketen, durch Nummerierung der Pakete
- Kontrolle der Lebensdauer von Paketen durch zählen der zurückgelegten Teilstrecke (hops)
- Selektives Fluten (Weiterleitung nicht auf allen, sondern nur auf einigen Leitungen)
- Random Walk (zufällige Auswahl einer Leitung)

### Hot Potato

Jeder Knoten versucht, eingehende Pakete so schnell wie möglich weiterzuleiten. (Die Knoten behandeln das Paket wie eine heiße Kartoffel, daher der Name) Hierbei wird die Übertragungsleitung mit der kürzesten Warteschlange gewählt. Es gibt auch Kombinationen dieses Verfahrens mit denen des statischen Routing:
- Auswahl der besten Übertragungsleitung nach statischem Verfahren, solange deren Warteschlangenlänge unter einer bestimmten Schwelle bleibt.
- Auswahl der Übertragungsleitung mit der kürzesten Warteschlange, falls deren Gewicht zu niedrig ist. (siehe statisches Routing weiter oben)

### Backward Learning

Bei diesem Verfahren müssen folgende Informationen im Paket gespeichert werden:
- Identifikation des Quellknotens;
- Zähler der mit jeder zurückgelegten Teilstrecke (hop) um eins erhöht wird. Wenn ein Knoten nun ein Paket erhält, kann er die Hopanzahl erkennen und weiß über welchen Eingang er es erhalten hat. Damit kann jeder Knoten aus den erhaltenen Paketen schließen, über welchen Weg er die anderen Knoten mit der minimalen Anzahl an Hops erreichen kann. Ein Eintrag in der Routingtabelle wird ersetzt, wenn ein Paket mit einer niedrigeren Hopanzahl den Knoten erreicht, als in der Tabelle eingetragen ist. Die Einträge werden aber auch dann aktualisiert, wenn eine gewisse Zeit lang kein Paket mehr mit einer bestimmten Hopanzahl von dem jeweiligen Knoten erhalten wurde. Es werden also in festen Zeitabständen Lernperioden zugelassen, in denen bessere Einträge mit schlechteren überschrieben werden, wenn diese eine gewisse Zeit alt sind. Dann wird davon ausgegangen, dass die bessere Verbindung nicht mehr existiert, und es wird die nächstbeste gewählt. Daraus ergeben sich folgende Probleme:

- während der Lernperiode ist das Routing nicht optimal;
- bei kurzen Lernperioden (Einträge werden schneller zum schlechteren aktualisiert) nehmen viele Pakete Wege unbekannter Qualität;
- bei langen Lernperioden ergibt sich ein schlechtes Anpassungsverhalten an die Situation im Netz.

### Delta Routing

Dieses Verfahren stellt eine Kombination zwischen zentralisiertem und isoliertem Routing dar. Hierbei misst jeder Knoten periodisch die Kosten (im Sinne von z.B. Verzögerung, Auslastung, Kapazität, etc.) jedes Übertragungsweges und sendet diese Informationen an das RCC. Das RCC berechnet nun die k besten Wege von Knoten i zu Knoten j (a für alle Knoten i, j), wobei nur Wege berücksichtigt werden die sich in ihrer initialen Leitung unterscheiden. Das RCC sendet an jeden Knoten die Liste aller äquivalenten Wege für alle Bestimmungsorte. Zum aktuellen Routing kann ein Knoten einen äquivalenten Weg zufällig wählen, oder auf Grund aktuell gemessener Kosten entscheiden. Das namensgebende Delta stammt hier aus der Funktion mit der ermittelt wird, ob zwei Wege als äquivalent anzusehen sind.

### Verteiltes adaptives Routing

Bei diesem Verfahren tauscht jeder Knoten periodisch Routing-Informationen mit jedem seiner Nachbarn aus. Auch hier unterhält jeder Knoten eine RoutingTabelle, die für jeden anderen Knoten im Netz einen Eintrag enthält. In dieser Tabelle sind die bevorzugte Übertragungsleitung für diesen Knoten, sowie eine Schätzung bzgl. Zeit oder Entfernung zu diesem Knoten enthalten:
- Anzahl Hops;
- Geschätzte Verzögerung in Millisekunden;
- Geschätzte totale Anzahl von Paketen, die entlang des Weges warten.

Diese Schätzungen werden gewonnen aus der Zeit/Entfernung zu den Nachbarn (z.B. mittels spezieller Echo-Pakete mit Zeitstempel) und/oder Schätzungen der Nachbarn. Ein Austausch der Routing-Informationen kann entweder synchron in bestimmten Aktualisierungsintervallen oder asynchron bei signifikanten Änderungen erfolgen. Zu diesem Verfahren gehören unter anderem das:
- Distance Vector Routing;
- Link State Routing.

### Distance Vector Routing

Ein verteiltes, adaptives Routing, welches als RIP (Routing Information Protocol) früher im Internet benutzt wurde. Hierbei speichert jeder Router eine Tabelle mit der besten Entfernung (z.B. Anzahl an hops, Verzögerung, etc.) zu jedem Ziel und dem dazugehörigen Ausgang. In der Praxis hat dieses Verfahren eine zu langsame Konvergenz zu einem konsistenten Zustand für viele Router, auf Grund der "Count-to-infinity"-Problematik.

### Link State Routing

Ein verteiltes, adaptives Routing, welches als OSPF (Open Shortest Path First) und IS-IS (Intermediate System to Intermediate System) im Internet eingesetzt wird. Dabei findet folgender Algorithmus Anwendung:
- Entdecken neuer Nachbarn mittels eines sog. H ELLO-Pakets;
- Messung der Verzögerung bzw. der Kosten zu jedem Nachbar-Knoten, mittels eines sog. ECHO-Pakets;
- Erstellung eines sog. LINK-STATE-Pakets mit allen gelernten Daten (Sender, Liste der Nachbarn mit Verzögerung, Alter, etc.), welches periodisch oder ereignisgesteuert (z. B. neuer Knoten, Ausfall eines Knotens, etc.) erzeugt wird;
- Versenden dieses Pakets an alle Nachbarn (prinzipiell mittels Fluten, aber mit Verfeinerung: Vernichten von Duplikationen, Zerstören der Information nach gewissem Alter, etc.);
- Berechnung des kürzesten Pfades zu allen anderen Routern (z.B. nach dem Algorithmus von Dijkstra).

Dieses Verfahren ist sehr rechenaufwendig, aber Optimierungen dieses Verfahrens existieren und gehören dann zu der jeweiligen Topologie usw. des Netzes.

### Hierarchisches Routing

Die Grundlage des Hierarchischen Routings ist die Aufteilung großer Netze in Regionen. Die Knoten einer Region haben nur Routing-Informationen über ihre eigene Region. In jeder Region existiert zumindest ein ausgezeichneter Knoten, welcher als Schnittstelle zu den anderen Regionen dient. In sehr großen Netzen sind weitere Hierarchien auf Grund zunehmender Größe der Netze möglich (Regionen, Cluster, Zonen, Gruppen,...).

Gemäß einer vorteilhaften Weiterbildung der vorliegenden Erfindung wird vorgeschlagen, dass die Logik die Funktionalität einer Routing-Engine realisiert. Die Aufgabe einer Routing-Engine eines Kommunikationscontrollers besteht insbesondere darin, eingehende Botschaften innerhalb des Netzes (umfassend den Peripherie-Bus, den Mikroprozessor, die Kommunikationscontroller und evtl. weitere Module) weiterzuleiten. Die zu realisierende Funktionalität einer Routing-Engine betrifft insbesondere die Steuerung und Koordination der oben ausführlich beschriebenen Routing-Verfahren.

Gemäß einer bevorzugten Ausführungsform der Erfindung wird vorgeschlagen, dass die Kommunikationscontroller jeweils einen Botschaftsspeicher zum Zwischenspeichern von Botschaften von der dem Kommunikationscontroller zugeordneten Kommunikationsverbindung oder für die Kommunikationsverbindung aufweist, wobei die Logik ein selbstständiges Routing von Daten zwischen dem Botschaftsspeicher eines Kommunikationscontroller und dem Mikroprozessor (Host-CPU) oder den Botschaftsspeichern der Kommunikationscontroller koordiniert und steuert.

Gemäß einer besonders vorteilhaften Weiterbildung der vorliegenden Erfindung wird vorgeschlagen, dass mindestens einer der Kommunikationscontroller einen Kommunikationsbaustein aufweist, der einen Botschaftsspeicher zum Zwischenspeichern von Botschaften von der dem Kommunikationscontroller zugeordneten Kommunikationsverbindung oder für die Kommunikationsverbindung umfasst, wobei die Logik ein selbstständiges Routing von Daten zwischen dem Botschaftsspeicher eines Kommunikationscontrollers oder dem Botschaftsspeicher des mindestens einen Kommunikationsbausteins und dem Mikroprozessor oder zwischen den Botschaftsspeichern der Kommunikationscontroller und/oder dem Botschaftsspeicher des mindestens einen Kommunikationsbausteins koordiniert und steuert.

Gemäß einer bevorzugten Ausführungsform der Erfindung wird vorgeschlagen, dass jeder Kommunikationsbaustein mindestens einen zwischen dem Botschaftsspeicher und dem Peripheriebus angeordneten Pufferspeicher, vorzugsweise mindestens einen Eingabepufferspeicher und mindestens einen Ausgangspufferspeicher, aufweist, wobei die Logik ein selbstständiges Routing von Daten zwischen dem Botschaftsspeicher eines Kommunikationscontrollers oder dem mindestens einen Pufferspeicher des Botschaftsspeichers des mindestens einen Kommunikationsbausteins und dem Mikroprozessor oder zwischen den Botschaftsspeichern der Kommunikationscontroller und/oder dem mindestens einen Pufferspeicher des Botschaftsspeichers des mindestens einen Kommunikationsbausteins koordiniert und steuert.

Die Logik in dem Kommunikationscontroller umfasst vorteilhafterweise eine Zustandsmaschine, vorzugsweise eine DMA-Zustandsmaschine. Die Zustandsmaschine ist vorzugsweise hardwaremäßig realisiert und in dem Kommunikationscontroller fest verdrahtet.

Gemäß einer anderen Ausführungsform der Erfindung wird vorgeschlagen, dass jeder der Kommunikationscontroller, der eine aktive Schnittstelle und eine Logik hat, einen Arbiter aufweist, der konkurrierende Zugriffe des Mikroprozessors und der Logik (z.B. der Zustandsmaschine) auf einen Botschaftsspeicher des Kommunikationscontrollers oder auf einen Botschaftsspeicher eines Kommunikationsbausteins oder auf mindestens einen Pufferspeicher eines Botschaftsspeichers eines Kommunikationsbausteins arbitriert.

Vorteilhafterweise umfasst jeder der Kommunikationscontroller, der eine aktive Schnittstelle und eine Logik hat, Kontroll- und/oder Statusregister aufweist, auf welche der Mikroprozessor zur Konfiguration, Ansteuerung und/oder Überwachung der Gateway-Funktionalität Zugriff hat.

Des weiteren wird vorgeschlagen, dass jeder der Kommunikationscontroller, der eine aktive Schnittstelle und eine Logik hat, einen Routing-Speicher aufweist, auf welchen der Mikroprozessor zur Ansteuerung und/oder Überwachung der Gateway-Funktionalität Zugriff hat.

Der Teilnehmer ist vorzugsweise Bestandteil eines FlexRay-Kommunikationssytems, in welchem eine Datenübertragung zwischen dem Teilnehmer und anderen an die FlexRay-Kommunikationsverbindung angeschlossenen FlexRay-Teilnehmern nach dem FlexRay-Protokoll erfolgt.

Als eine weitere Lösung der Aufgabe der vorliegenden Erfindung wird ausgehend von dem Kommunikationscontroller der eingangs genannten Art vorgeschlagen, dass der Kommunikationscontroller eine aktive Schnittstelle, über die der Kommunikationscontroller mit dem Peripherie-Bus in Verbindung steht, und eine Logik zur selbstständigen Realisierung einer Gateway-Funktionalität aufweist.

Als noch eine weitere Lösung der Aufgabe der vorliegenden Erfindung wird ausgehend von dem Verfahren der eingangs genannten Art vorgeschlagen, dass mindestens einer der Kommunikationscontroller über eine aktive Schnittstelle an den Peripherie-Bus angeschlossen wird und die Gateway-Funktionalität durch eine Logik in dem mindestens einen Kommunikationscontroller realisiert wird.

Gemäß einer vorteilhaften Weiterbildung der Erfindung wird vorgeschlagen, dass im Rahmen der Gateway-Funktionalität Interrupts ausgelöst und verarbeitet werden, Botschaften fragmentiert und defragmentiert werden, Botschaften zwischen Kommunikationscontrollern des Teilnehmers und/oder Botschaften zwischen einem der Kommunikationscontroller und dem Speicherelement des Mikroprozessors ausgetauscht werden.

Des weiteren wird vorgeschlagen, dass der Mikroprozessor Kontroll- und Statusinformationen in einem Kontroll- und/oder Statusregister des mindestens einen Kommunikationscontrollers ablegt und so die Gateway-Funktionalität konfiguriert, gesteuert und/oder überwacht wird. Außerdem wird vorgeschlagen, dass der Mikroprozessor Routing-Informationen in einem Routing-Speicher des mindestens einen Kommunikationscontrollers ablegt und so die Gateway-Funktionalität gesteuert und/oder überwacht wird.

Gemäß einer bevorzugten Ausführungsform der Erfindung wird vorgeschlagen, dass die Logik in dem mindestens einen Kommunikationscontroller eine Zustandsmaschine umfasst, wobei konkurrierende Zugriffe des Mikroprozessors und der Zustandsmaschine auf einen Botschaftsspeicher des Kommunikationscontrollers oder auf einen Botschaftsspeicher eines Kommunikationsbausteins oder auf mindestens einen Pufferspeicher eines Botschaftsspeichers eines Kommunikationsbausteins arbitriert werden.

Zum aktiven Kopieren von Daten in einen Botschaftsspeicher eines anderen Kommunikationscontrollers wird vorgeschlagen, dass von der Logik des mindestens einen Kommunikationscontrollers selbstständig folgende Schritte veranlasst und gesteuert werden:
- Sichtbarmachen der empfangenen Daten in einem Pufferspeicher des mindestens einen Kommunikationscontrollers;
- Anlegen einer Kopie der empfangenen Daten in einem konfigurierbaren Adressbereich eines dem Mikroprozessor (Host-CPU) zugeordneten Speicherelements oder in einem Pufferspeicher eines anderen Kommunikationscontrollers durch Schreibzugriffe über die aktive Schnittstelle; und
- beim Anlegen einer Kopie der Daten in einem Pufferspeicher eines anderen Kommunikationscontrollers, Starten eines Transfers der abgelegten Daten aus dem Pufferspeicher in einen Botschaftsspeicher des anderen Kommunikationscontrollers.

Zum aktiven Kopieren von Daten aus einem Botschaftsspeicher eines anderen Kommunikationscontrollers wird vorgeschlagen, dass von der Logik des mindestens einen Kommunikationscontrollers selbstständig folgende Schritte veranlasst und gesteuert werden:
- Sichtbarmachen der Daten in einem Pufferspeicher des anderen Kommunikationscontrollers;
- Anlegen einer Kopie des Inhalts eines dem Mikroprozessor zugeordneten Speicherelements oder des Pufferspeichers des anderen Kommunikationscontrollers in einem konfigurierbaren Adressbereich in mindestens einem Pufferspeicher des Kommunikationscontrollers durch Lesezugriffe über die aktive Schnittstelle; und
- Starten eines Transfers der abgelegten Daten aus dem mindestens einen Pufferspeicher in einen Botschaftsspeicher des Kommunikationsbausteins des Kommunikationscontrollers.

Schließlich wird vorgeschlagen, dass das Verfahren zum aktiven Kopieren von Daten in einen und/oder aus einem Botschaftsspeicher eines anderen Kommunikationscontrollers zeitgesteuert, durch den Empfang von Daten, insbesondere einer Botschaft, durch Triggerung durch den mindestens einen Kommunikationscontroller, oder durch Triggerung durch den Mikroprozessor ausgelöst wird. Die Triggerung umfasst üblicherweise die Übermittlung eines besonderen Auslöse-Befehls an die Logik.

### Zeichnungen

Nachfolgend werden anhand der Figuren weitere Merkmale und Vorteile der Erfindung näher erläutert. Es zeigen:
- Figur 1: einen Kommunikationsbaustein und dessen Anbindung an eine Kommunikationsverbindung und einen Kommunikations- oder Host-Teilnehmer eines FlexRay-Kommunikationssystems in sche- matischer Darstellung;
- Figur 2: eine spezielle Ausführungsform des Kommunikationsbausteins aus Figur 1 sowie dessen Anbindung im Detail;
- Figur 3: die Struktur eines Botschaftsspeichers des Kommunikationsbau- steins aus Figur 2;
- Figur 4 bis 6: die Architektur und den Prozess eines Datenzugriffs in Richtung vom Teilnehmer zum Botschaftsspeicher in schematischer Darstel- lung;
- Figur 7 bis 9: die Architektur und den Prozess eines Datenzugriffs in Richtung vom Botschaftsspeicher zum Teilnehmer;
- Figur 10: die Struktur eines Botschaftsverwalters und darin enthaltener Zu- standsmaschinen in schematischer Darstellung;
- Figur 11: Bauteile des Kommunikationsbausteins aus Figur 1 und 2 sowie den Teilnehmer und die entsprechenden, durch den Botschafts- verwalter gesteuerten Datenpfade in schematischer Darstellung;
- Figur 12: die Zugriffsverteilung auf den Botschaftsspeicher bezogen auf die Datenpfade in Figur 11;
- Figur 13: einen erfindungsgemäßen Teilnehmer eines Kommunikationssystems;
- Figur 14: mögliche Übertragungswege für geroutete Daten in einem erfindungsgemäßen Teilnehmer;
- Figur 15: einen erfindungsgemäßen Kommunikationscontroller des Teilnehmers aus Figur 13 im Detail;

- Figur 16: eine Teilnehmerschnittstelle des erfindungsgemäßen Kommunikationscontrollers auf Figur 15; und
- Figur 17: einen aus dem Stand der Technik bekannten Teilnehmer eines Kommunikationssystems.

### Beschreibung der Ausführungsbeispiele

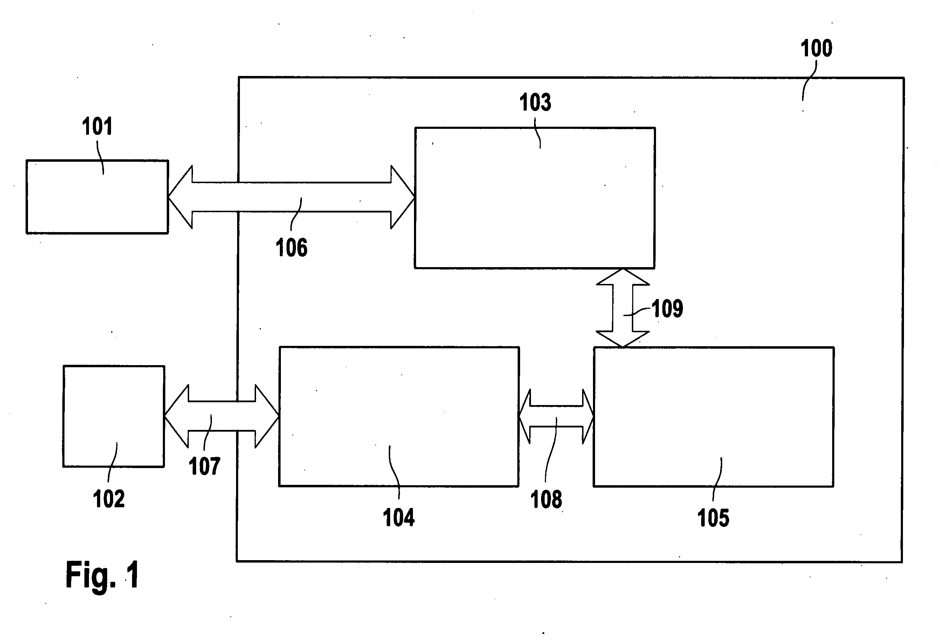

Figur 1 zeigt schematisch einen FlexRay-Kommunikationsbaustein 100 zur Anbindung eines Teilnehmers oder Hosts 102 an eine FlexRay-Kommunikationsverbindung 101, also die physikalische Schicht des FlexRay. Diese ist bspw. als ein FlexRay-Datenbus, der vorzugsweise über zwei Übertragungsleitungen verfügt, ausgebildet. Dazu ist der FlexRay-Kommunikationsbaustein 100 über eine Verbindung 107 mit dem Teilnehmer bzw. Teilnehmerprozessor 102 und über eine Verbindung 106 mit der Kommunikationsverbindung 101 verbunden. Zur problemlosen Anbindung zum einen bezogen auf Übertragungszeiten und zum anderen bezogen auf die Datenintegrität sind schematisch im Wesentlichen drei Anordnungen im FlexRay-Kommunikationsbaustein unterschieden. Dabei dient eine erste Anordnung 105 zur Speicherung, insbesondere Zwischenablage, wenigstens eines Teils der zu übertragenden Botschaften. Zwischen dem Teilnehmer 102 und dieser ersten Anordnung 105 ist über die Verbindungen 107 und 108 eine zweite Anordnung 104 geschaltet. Ebenso ist zwischen Kommunikationsverbindung 101 und die erste Anordnung 105 eine dritte Anordnung 103 über die Verbindungen 106 und 109 geschaltet, wodurch ein sehr flexibles Eingeben und Ausgeben von Daten als Teil von Botschaften, insbesondere FlexRay-Botschaften in bzw. aus der ersten Anordnung 105 mit Gewährleistung der Datenintegrität bei optimaler Geschwindigkeit erzielbar ist.

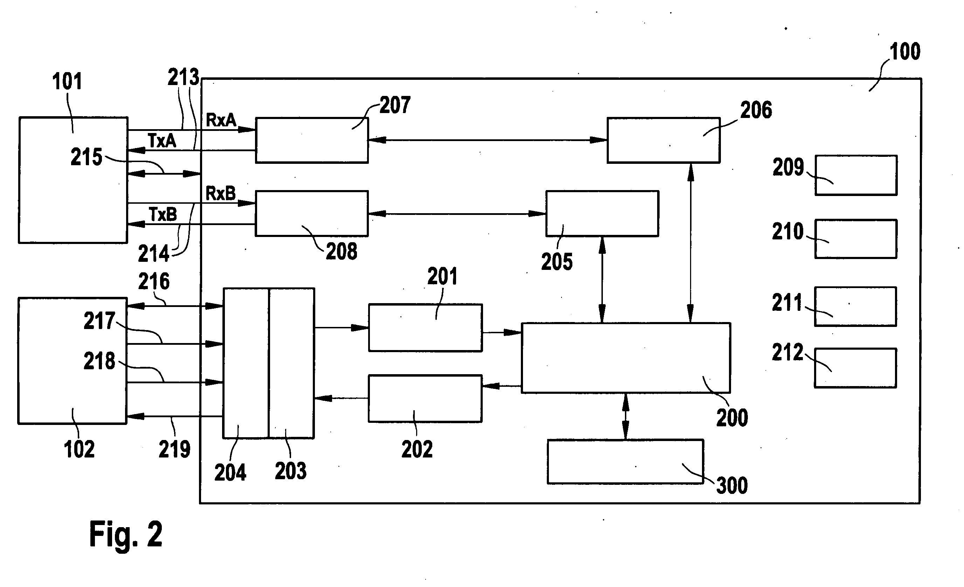

In Figur 2 ist dieser Kommunikationsbaustein 100 in einer bevorzugten Ausführungsform noch einmal detaillierter dargestellt. Ebenso detaillierter dargestellt sind die jeweiligen Verbindungen 106 bis 109. Zur Anbindung des FlexRay-Kommunikationsbausteins 100 an den FlexRay-Teilnehmer 102 bzw. den Host-Prozessor enthält die zweite Anordnung 104 einen Eingangspufferspeicher oder Eingabepufferspeicher 201 (Input Buffer IBF), einen Ausgangspufferspeicher oder Ausgabepufferspeicher 202 (Output Buffer OBF) sowie einen Schnittstellenbaustein bestehend aus zwei Teilen 203 und 204, wobei der eine Teilbaustein 203 teilnehmerunabhängig und der zweite Teilbaustein 204 teilnehmerspezifisch ist. Der teilnehmerspezifische Teilbaustein 204 (Customer CPU Interface CIF) verbindet eine teilnehmerspezifische Host-CPU 102, also einen kundenspezifischen Teilnehmer 102 mit dem FlexRay-Kommunikationsbaustein 100. Dazu ist eine bidirektionale Datenleitung 216, eine Adressleitung 217 sowie ein Steuereingang 218 vorgesehen. Ebenso vorgesehen ist mit 219 ein Interrupt- oder Unterbrechungs-Ausgang. Der teilnehmerspezifische Teilbaustein 204 steht in Verbindung mit einem teilnehmerunabhängigen Teilbaustein 203 (Generic CPU Interface, GIF), d. h. der FlexRay-Kommunikationsbaustein oder das FlexRay-IP-Modul verfügt über ein generisches, also allgemeines, CPU-Interface 203, an das sich über entsprechende teilnehmerspezifische Teilbausteine 204, also Customer CPU Interfaces CIF eine große Anzahl von unterschiedlichen kundenspezifischen Host CPUs 102 anschließen lassen. Dadurch muss abhängig vom Teilnehmer 102 nur der Teilbaustein 204 variiert werden, was einen deutlich geringeren Aufwand bedeutet. Das CPU-Interface 203 und der restliche Kommunikationsbaustein 100 kann unverändert übernommen werden.

Der Eingabepufferspeicher oder Eingangspufferspeicher 201 und der Ausgangspufferspeicher oder Ausgabepufferspeicher 202 können in einem gemeinsamen Speicherbaustein oder aber in getrennten Speicherbausteinen ausgebildet sein. Dabei dient der Eingabepufferspeicher 201 für die Zwischenspeicherung von Botschaften für die Übertragung zu einem Botschaftsspeicher 300. Dabei ist der Eingabepufferbaustein 201 vorzugsweise so ausgebildet, dass er zwei vollständige Botschaften bestehend aus jeweils einem Kopfsegment oder Headersegment, insbesondere mit Konfigurationsdaten und ein Datensegment oder Payload Segment speichern kann. Dabei ist der Eingabepufferspeicher 201 zweiteilig (Teilpufferspeicher und Schattenspeicher) ausgebildet, wodurch sich durch wechselweises Schreiben der beiden Teile des Eingabepufferspeichers bzw. durch Zugriffswechsel die Übertragung zwischen Teilnehmer-CPU 102 und Botschaftsspeicher 300 beschleunigen lässt. Ebenso dient der Ausgabepufferspeicher oder Ausgangspufferspeicher 202 (Output-Buffer OBF) für die Zwischenspeicherung von Botschaften für die Übertragung vom Botschaftsspeicher 300 zur Teilnehmer-CPU 102. Dabei ist auch der Ausgabepuffer 202 so gestaltet, dass zwei komplette Botschaften bestehend aus Kopfsegment, insbesondere mit Konfigurationsdaten und Datensegment, also Payload Segment, gespeichert werden können. Auch hier ist der Ausgabepufferspeicher 202 in zwei Teile, einen Teilpufferspeicher und einen Schattenspeicher aufgeteilt, wodurch sich auch hier durch wechselweises Lesen der beiden Teile die Übertragung bzw. durch Zugriffswechsel die Übertragung zwischen Teilnehmer- bzw. Host-CPU 102 und Botschaftsspeicher 300 beschleunigen lässt. Diese zweite Anordnung 104 bestehend aus den Blöcken 201 bis 204 ist mit der ersten Anordnung 105 wie dargestellt verbunden.

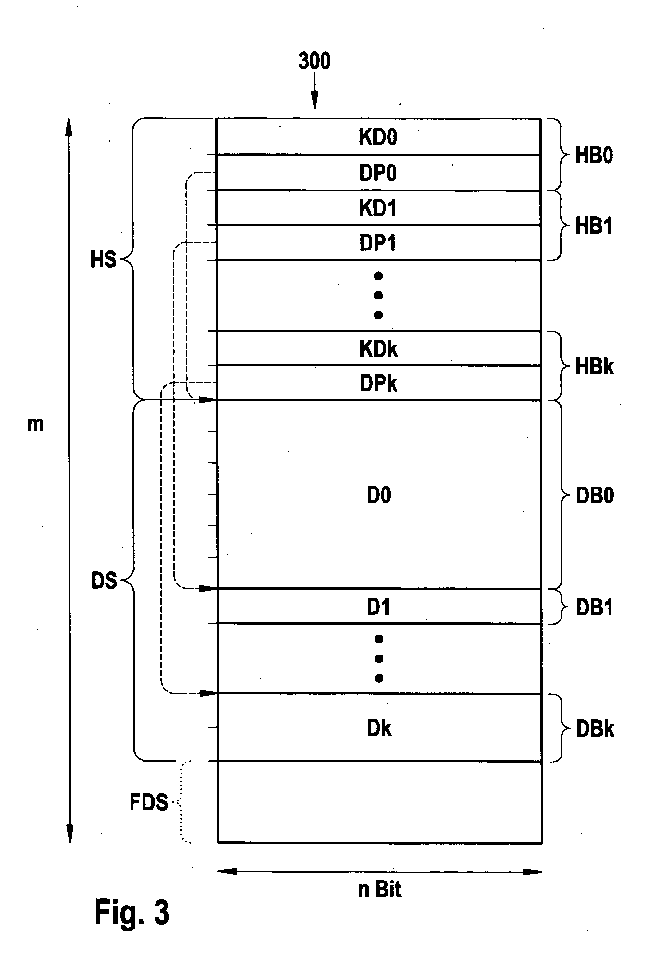

Die Anordnung 105 besteht aus einem Botschaftsverwalter 200 (Message Handler MHD) und einem Botschaftsspeicher 300 (Message RAM). Der Botschaftsverwalter 200 kontrolliert bzw. steuert den Datentransfer zwischen dem Eingabepufferspeicher 201 sowie Ausgabepufferspeicher 202 und dem Botschaftsspeicher 300. Gleichermaßen kontrolliert bzw. steuert er die Datenübertragung in der anderen Richtung über die dritte Anordnung 103. Der Botschaftsspeicher 300 ist vorzugsweise als single-ported RAM ausgeführt. Dieser RAM-Speicher speichert die Botschaften bzw. Botschaftsobjekte, also die eigentlichen Daten, zusammen mit Konfigurations- und Statusdaten. Die genaue Struktur des Botschaftsspeichers 300 ist in Figur 3 näher dargestellt.

Die dritte Anordnung 103 besteht aus den Blöcken 205 bis 208. Entsprechend den beiden Kanälen des FlexRay Physical Layer ist diese Anordnung 103 in zwei Datenpfade mit je zwei Datenrichtungen aufgeteilt. Dies wird durch die Verbindungen 213 und 214 deutlich, worin die beiden Datenrichtungen für den Kanal A mit RxA und TxA für Empfangen (RxA) und Senden (TxA) sowie für Kanal B mit RxB und TxB dargestellt sind. Mit Verbindung 215 ist ein optionaler bidirektionaler Steuereingang bezeichnet. Die Anbindung der dritten Anordnung 103 erfolgt über einen ersten Pufferspeicher 205 für Kanal B und einen zweiten Pufferspeicher 206 für Kanal A. Diese beiden Pufferspeicher (Transient Buffer RAMs: RAM A und RAM B) dienen als Zwischenspeicher für die Datenübertragung von bzw. zu der ersten Anordnung 105. Entsprechend der beiden Kanäle sind diese beiden Pufferspeicher 205 und 206 mit jeweils einem Schnittstellenbaustein 207 und 208 verbunden, die die FlexRay-Protokoll-Controller oder Busprotokoll-Controller bestehend aus einem Sende-/Empfangs-Schieberegister und der FlexRay Protokoll Finite State Maschine, enthalten. Die beiden Pufferspeicher 205 und 206 dienen somit als Zwischenspeicher für die Datenübertragung zwischen den Schieberegistern der Schnittstellenbausteine oder FlexRay Protokoll Controller 207 und 208 und dem Botschaftsspeicher 300. Auch hier werden vorteilhafter Weise durch jeden Pufferspeicher 205 oder 206 die Datenfelder, also das Payload Segment oder Datensegment zweier FlexRay-Botschaften gespeichert.

Weiterhin dargestellt im Kommunikationsbaustein 100 ist mit 209 die globale Zeiteinheit (Global Time Unit GTU), welche für die Darstellung der globalen Zeitraster im FlexRay, also den Mikrotick µT und den Makrotick MT, zuständig ist. Ebenso wird über die globale Zeiteinheit 209 die fehlertolerante Uhrensynchronisation der Zykluszähler (Cycle Counter) und die Kontrolle der zeitlichen Abläufe im statischen und dynamischen Segment des FlexRay geregelt. Mit Block 210 ist die allgemeine Systemsteuerung (System Universal Control SUC) dargestellt, durch welche die Operationsmodi des FlexRay-Kommunikationscontrollers kontrolliert und gesteuert werden. Dazu gehören der Wakeup, der Startup, die Reintegration bzw. Integration, Normaloperation (normal operation) und passive Operation (passive operation).

Block 211 zeigt das Netzwerk und Fehlermanagement (Network- und Error Management N EM), wie in der FlexRay-Protokollspezifikation v2.0 beschrieben. Block 212 schließlich zeigt die Unterbrechungssteuerung (Interrupt Control INT), welche die Status- und Fehlerunterbrechungsflaggen (status and error interrupt flags) verwaltet und die Unterbrechungsausgänge 219 zur Teilnehmer-CPU 102 kontrolliert bzw. steuert. Der Block 212 enthält außerdem einen absoluten und einen relativen Timer bzw. Zeitgeber zur Erzeugung der Zeitunterbrechungen oder Timerinterrupts.

Für die Kommunikation in einem FlexRay-Netzwerk können Botschaftsobjekte bzw. Botschaften (Message Buffer) mit bis zu 254 Datenbytes konfiguriert werden. Der Botschaftsspeicher 300 ist insbesondere ein Botschafts-RAM-Speicher (Message RAM), welcher z. B. bis zu maximal 128 Botschaftsobjekten speichern kann. Alle Funktionen, die die Behandlung bzw. Verwaltung der Botschaften selbst betreffen, sind dem Botschaftsverwalter oder Message Handler 200 implementiert. Dies sind z.B. die Akzeptanzfilterung, Transfer der Botschaften zwischen den beiden FlexRay-Protokoll-Controller-Blöcken 207 und 208 und dem Botschaftsspeicher 300, also dem Message RAM sowie die Kontrolle der Sendereihenfolge und das Bereitstellen von Konfigurationsdaten bzw. Statusdaten.

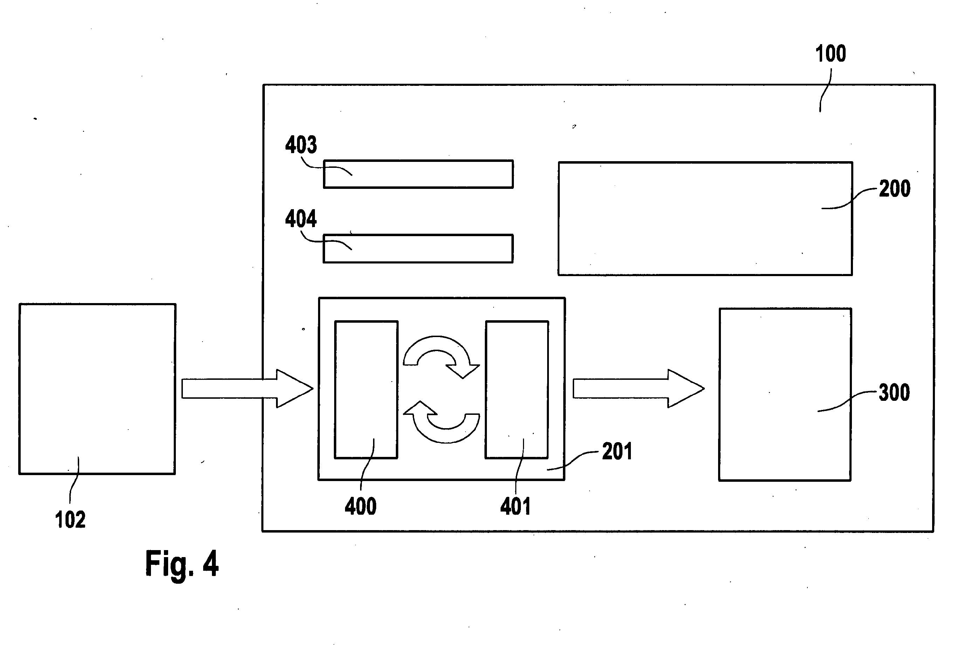

Eine externe CPU, also ein externer Prozessor des Teilnehmers 102, kann über die Teilnehmerschnittstelle 107 mit dem teilnehmerspezifischen Teil 204 direkt auf die Register des FlexRay-Kommunikationsbausteins 100 zugreifen. Dabei wird eine Vielzahl von Registern verwendet. Diese Register werden eingesetzt, um die FlexRay Protokoll Controller, also die Schnittstellenbausteine 207 und 208, den Botschaftsverwalter (Message Handler MHD) 200, die globale Zeiteinheit (Global Time Unit GTU) 209, den allgemeinen Systemcontroller (System Universal Controller SUC) 210, die Netzwerk- und Fehlermanagementeinheit (Network und Error Management Unit N EM) 211, den Unterbrechungscontroller (Interrupt Controller INT) 212 sowie den Zugriff auf das Message RAM, also den Botschaftsspeicher 300 zu konfigurieren und zu steuern und ebenso den entsprechenden Status anzuzeigen. Zumindest auf Teile dieser Register wird noch in den Figuren 4 bis 6 und 7 bis 9 näher eingegangen. Ein solch beschriebener FlexRay-Kommunikationsbaustein 100 ermöglicht die einfache Umsetzung der FlexRay-Spezifikation v2.0, wodurch einfach ein ASIC oder ein Mikrocontroller mit entsprechender FlexRay-Funktionalität generiert werden kann.

Durch den beschriebenen FlexRay-Kommunikationsbaustein 100 kann die FlexRay-Protokollspezifikation, insbesondere v2.0, vollständig unterstützt werden und es sind damit z. B. bis zu 128 Botschaften bzw. Botschaftsobjekte konfigurierbar. Dabei ergibt sich ein flexibel konfigurierbarer Botschaftsspeicher für die Speicherung einer unterschiedlichen Anzahl von Botschaftsobjekten abhängig von der Größe des jeweiligen Datenfeldes bzw. Datenbereiches der Botschaft. Somit sind also vorteilhafterweise Botschaften- oder Botschaftsobjekte zu konfigurieren, die unterschiedlich lange Datenfelder besitzen. Der Botschaftsspeicher 300 ist dabei vorteilhafter Weise als FIFO (first in-first out) ausgebildet, so dass sich ein konfigurierbarer Empfangs-FIFO ergibt. Jede Botschaft bzw. jedes Botschaftsobjekt im Speicher kann als Empfangsspeicherobjekt (Receive-Buffer), Sendespeicherobjekt (Transmit-Buffer) oder als Teil des konfigurierbaren Empfangs-FIFOs konfiguriert werden. Ebenso ist eine Akzeptanzfilterung auf Frame-ID, Channel-ID und Cycle-Counter im FlexRay-Netzwerk möglich. Zweckmäßiger Weise wird somit das Netzwerkmanagement unterstützt. Vorteilhafterweise sind außerdem maskierbare Modulinterrupts vorgesehen.

In Figur 3 ist detailliert die Aufteilung des Botschaftsspeichers 300 beschrieben. Für die nach der FlexRay-Protokollspezifikation geforderte Funktionalität eines FlexRay-Kommunikationscontrollers wird ein Botschaftsspeicher für das Bereitstellen von zu sendenden Botschaften (Transmit Buffer Tx) sowie das Abspeichern von fehlerfrei empfangenen Botschaften (Receive Buffer Rx) benötigt. Ein FlexRay-Protokoll erlaubt Botschaften mit einem Datenbereich, also einem Payload-Bereich von 0 bis 254 Bytes. Wie in Figur 2 dargestellt ist der Botschaftsspeicher 300 Teil des FlexRay-Kommunikationsbausteins 100. Das nachfolgend beschriebene Verfahren sowie der entsprechende Botschaftsspeicher 300 beschreiben die Speicherung von zu sendenden Botschaften sowie von empfangenen Botschaften, insbesondere unter Verwendung eines Random Access Memory (RAM), wobei es durch den beschriebenen Mechanismus möglich ist in einem Botschaftsspeicher vorgegebener Größe eine variable Anzahl von Botschaften zu speichern. Dabei ist die Anzahl der speicherbaren Botschaften abhängig von der Größe der Datenbereiche der einzelnen Botschaften, wodurch zum einen die Größe des benötigten Speichers minimiert werden kann ohne die Größe der Datenbereiche der Botschaften einzuschränken und zum anderen eine optimale Ausnutzung des Speichers erfolgt. Im Folgenden nun soll diese variable Aufteilung eines insbesondere RAM-basierten Botschaftsspeichers 300 für einen FlexRay Communication Controller näher beschrieben werden.

Zur Implementierung wird nun beispielhaft ein Botschaftsspeicher mit einer festgelegten Wortbreite von n Bit, beispielsweise 8, 16, 32 usw., sowie einer vorgegebenen Speichertiefe von m Worten vorgegeben (m, n als natürliche Zahlen). Dabei wird der Botschaftsspeicher 300 in zwei Segmente aufgeteilt, ein Header Segment oder Kopfsegment HS und ein Datensegment DS (Payload Section, Payload Segment). Pro Botschaft wird somit ein Headerbereich HB und ein Datenbereich DB angelegt. Für Botschaften 0, 1 bis k (k als natürliche Zahl) werden somit Headerbereiche oder Kopfbereiche HB0, HB1 bis HBk und Datenbereiche DB0, DB1 bis DBk angelegt. In einer Botschaft wird also zwischen ersten und zweiten Daten unterschieden, wobei die ersten Daten Konfigurationsdaten und/oder Statusdaten bezüglich der FlexRay Botschaft entsprechen und jeweils in einem Headerbereich HB (HB0, HB1, ..., HBk) abgelegt werden. Die zweiten Daten, die den eigentlichen Nutzdaten entsprechen, die übertragen werden sollen, werden entsprechend in Datenbereichen DB (DBO, DB1, ... , DBk) abgelegt. Somit entsteht für die ersten Daten pro Botschaft ein erster Datenumfang (in Bit, Byte oder Speicherworten gemessen) und für die zweiten Daten einer Botschaft ein zweiter Datenumfang (ebenfalls in Bit, Byte oder Speicherworten gemessen), wobei der zweite Datenumfang pro Botschaft unterschiedlich sein kann. Die Aufteilung zwischen Kopfsegment HS und Datensegment DS ist nun im Botschaftsspeicher 300 variabel, d. h. es existiert keine vorgegebene Grenze zwischen den Bereichen. Die Aufteilung zwischen Kopfsegment HS und Datensegment DS ist abhängig von der Anzahl k der Botschaften sowie dem zweiten Datenumfang, also dem Umfang der eigentlichen Nutzdaten, einer Botschaft bzw. aller k Botschaften zusammen. Den Konfigurationsdaten KD0, KD1 bis KDk der jeweiligen Botschaft wird nun ein Zeigerelement oder Datapointer DPO, DPI bis DPk jeweils direkt zugeordnet. In der speziellen Ausgestaltung wird jedem Kopfbereich HBO, HB 1 bis HBk eine feste Anzahl von Speicherwerten, hier zwei, zugeordnet, so dass immer ein Konfigurationsdatum KD (KD0, KD 1, ..., KDk) und ein Zeigerelement DP (DPO, DP1, ..., DPk) zusammen in einem Headerbereich HB abgelegt sind. An diesem Kopfsegment HS mit den Headerbereichen HB, dessen Größe bzw. erster Datenumfang abhängig von der Anzahl k der zu speichernden Botschaften ist, schließt das Datensegment DS zur Speicherung der eigentlichen Botschaftsdaten D0, D1 bis Dk an. Dieses Datensegment (oder Datensection) DS hängt in seinem Datenumfang vom jeweiligen Datenumfang der abgelegten Botschaftsdaten ab, hier z.B. in DB0 sechs Worte, DB1 ein Wort und DBk zwei Worte. Die jeweiligen Zeigerelemente DP0, DP1 bis DPk zeigen somit immer zum Beginn, also auf die Anfangsadresse des jeweiligen Datenbereichs DB0, DB1 bis DBk, in denen die Daten D0, D1 bis Dk der jeweiligen Botschaften 0, 1, bis k abgelegt sind. Damit ist die Aufteilung des Botschaftsspeichers 300 zwischen Kopfsegment HS und Datensegment DS variabel und hängt von der Anzahl k der Botschaften selbst sowie dem jeweiligen Datenumfang einer Botschaft und damit dem gesamten zweiten Datenumfang ab. Werden weniger Botschaften konfiguriert, wird das Kopfsegment HS kleiner und der frei werdende Bereich im Botschaftsspeicher 300 kann als Zusatz zum Datensegment DS für die Speicherung von Daten verwendet werden. Durch diese Variabilität kann eine optimale Speicherausnutzung gewährleistet werden, womit auch die Verwendung kleinerer Speicher möglich ist. Das freie Datensegment FDS ,insbesondere dessen Größe, ebenfalls abhängig von der Kombination aus Anzahl k der gespeicherten Botschaften und dem jeweiligen zweiten Datenumfang der Botschaften ist somit minimal und kann sogar 0 werden.

Neben der Verwendung von Zeigerelementen ist es auch möglich, die ersten und zweiten Daten, also die Konfigurationsdaten KD (KD0, KD1, ..., KDk) und die eigentlichen Daten D (D0, D1, ... , Dk) in einer vorgebbaren Reihenfolge abzulegen, so dass die Reihenfolge der Kopfbereiche HB0 bis HBk im Kopfsegment HS und die Reihenfolge der Datenbereiche DB0 bis DBk im Datensegment DS jeweils identisch ist. Dann könnte unter Umständen sogar auf ein Zeigerelement verzichtet werden.

In einer besonderen Ausgestaltung ist dem Botschaftsspeicher ein Fehlerkennungserzeuger, insbesondere ein Parity-Bit-Generator-Element und ein Fehlerkennungsprüfer, insbesondere ein Parity-Bit-Prüf-Element zugeordnet, um die Korrektheit der gespeicherten Daten in HS und DS zu gewährleisten, indem pro Speicherwort oder pro Bereich (HB und/oder DB) eine Prüfsumme eben insbesondere als Parity-Bit mit abgelegt werden kann. Andere Kontrollkennungen, z.B. ein CRC (Cyclic Redundancy Check) oder auch Kennungen höherer Mächtigkeit wie ECC (Error Code Correction) sind denkbar. Damit sind gegenüber einer festgelegten Aufteilung des Botschaftsspeichers folgende Vorteile gegeben:

Der Anwender kann bei der Programmierung entscheiden, ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich DB wird der vorhandene Speicherplatz optimal ausgenutzt. Der Anwender hat die Möglichkeit einen Datenspeicherbereich gemeinsam für unterschiedliche Botschaften zu nutzen.

Bei der Implementierung des Communication Controllers auf einer integrierten Schaltung kann die Größe des Botschaftsspeichers 300 durch Anpassung der Speichertiefe (Anzahl m der Worte) des verwendeten Speichers an die Bedürfnisse der Applikation angepasst werden, ohne die sonstigen Funktionen des Communication Controllers zu ändern.

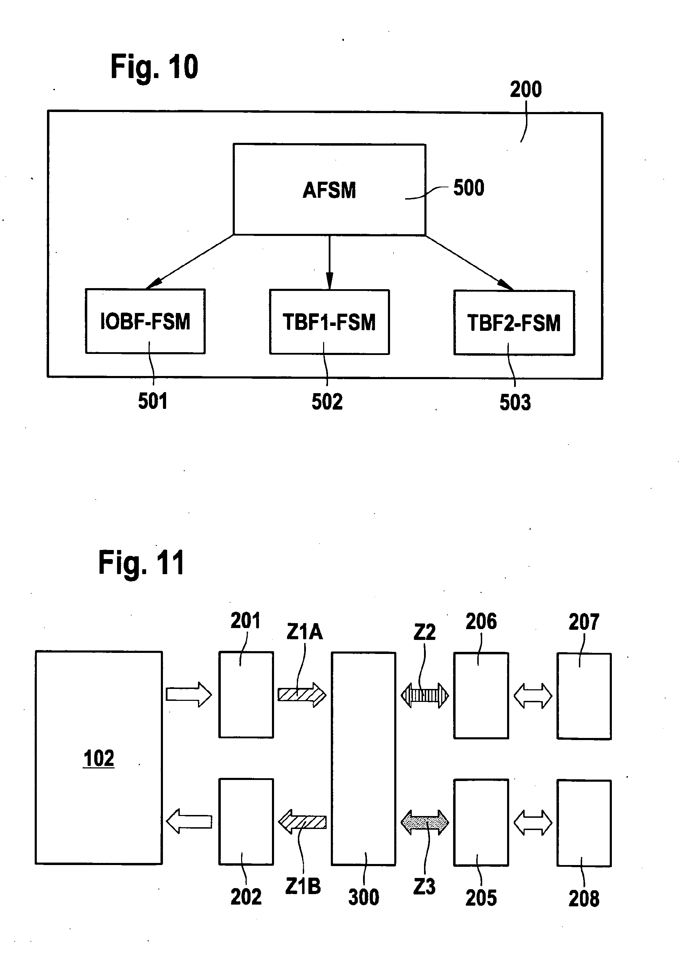

Im Weiteren wird nun anhand der Figuren 4 bis 6 sowie 7 bis 9 der Host-CPU-Zugriff, also Schreiben und Lesen von Konfigurationsdaten bzw. Statusdaten und der eigentlichen Daten über die Pufferspeicheranordnung 201 und 202, näher beschrieben. Dabei ist es das Ziel, eine Entkopplung bezüglich der Datenübertragung derart herzustellen, dass die Datenintegrität sichergestellt werden kann und gleichzeitig eine hohe Übertragungsgeschwindigkeit gewährleistet ist. Die Steuerung dieser Vorgänge erfolgt über den Botschaftsverwalter 200, was später noch näher in den Figuren 10, 11 und 12 beschrieben wird.

In den Figuren 4, 5 und 6 werden zunächst die Schreibzugriffe auf den Botschaftsspeicher 300 durch die Host-CPU der Teilnehmer-CPU 102 über den Eingangspufferspeicher 201 näher erläutert. Dazu zeigt Figur 4 noch einmal den Kommunikationsbaustein 100, wobei aus Gründen der Übersichtlichkeit nur die hier relevanten Teile des Kommunikationsbausteins 100 gezeigt sind. Dies ist zum einen der für die Steuerung der Abläufe verantwortliche Botschaftsverwalter 200 sowie zwei Kontrollregister 403 und 404, die wie dargestellt außerhalb des Botschaftsverwalters 200 im Kommunikationsbaustein 100 untergebracht sein können, aber auch im Botschaftsverwalter 200 selbst enthalten sein können. 403 stellt dabei das Eingangs-Anforderungsregister (Input Buffer Command Request Register) dar und 404 das Eingangs-Maskierungsregister (Input Buffer Command Mask Register). Schreibzugriffe der Host-CPU 102 auf den Botschaftsspeicher 300 (Message RAM) erfolgen also über einen zwischengeschalteten Eingangspufferspeicher 201 (Input Buffer). Dieser Eingangspufferspeicher 201 ist nun geteilt bzw. gedoppelt ausgelegt, und zwar als Teilpufferspeicher 400 und einem zu dem Teilpufferspeicher zugehörigen Schattenspeicher 401. Damit kann wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung gewährleistet werden.

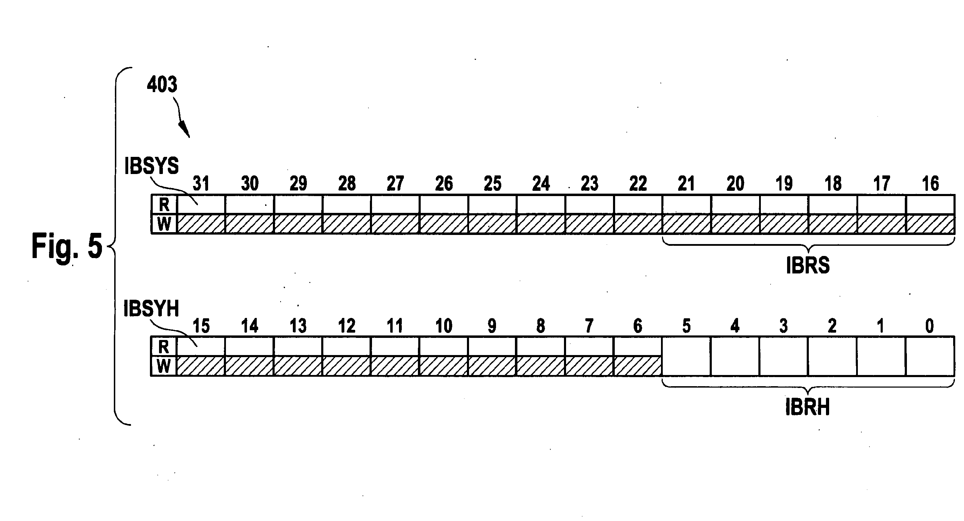

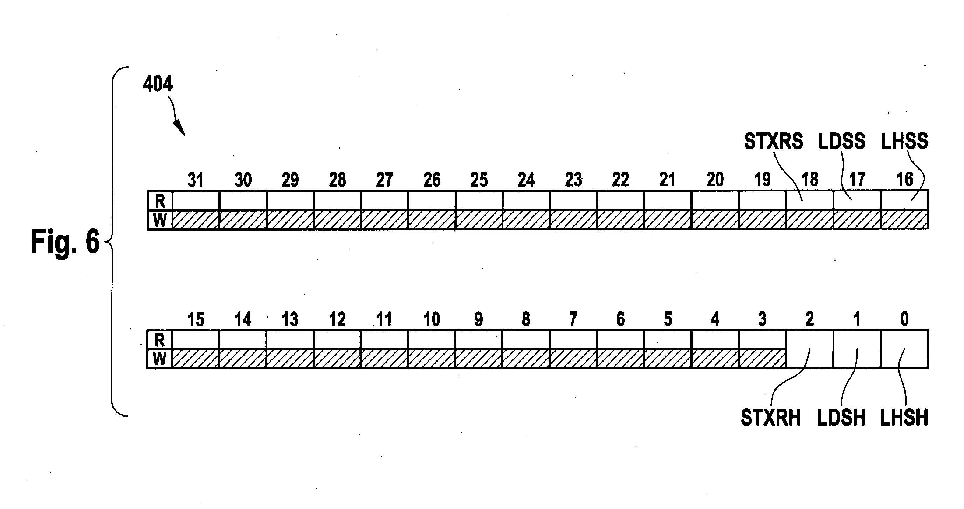

Die Steuerung der Zugriffe erfolgt über das Eingangs-Anforderungsregister 403 und über das Eingangs-Maskierungsregister 404. Im Register 403 sind in Figur 5 mit den Zahlen von 0 bis 31 die jeweiligen Bitstellen in 403 hier beispielhaft für eine Breite von 32 Bit dargestellt. Gleiches gilt für das Register 404 und die Bitstellen 0 bis 31 in dem Maskierungsregister 404 aus Figur 6.

Es erhalten nun beispielhaft die Bitstellen 0 bis 5, 15, 16 bis 21 und 31 des Registers 403 bezüglich der Ablaufsteuerung eine besondere Funktion. So ist in die Bitstellen 0 bis 5 des Registers 403 eine Kennung IBRH (Input Buffer Request Host) als Botschaftskennung eintragbar. Ebenso ist in die Bitstellen 16 bis 21 des Registers 403 eine Kennung IBRS (Input Buffer Request Shadow) eintragbar. Ebenso sind in Registerstelle 15 von 403 IBSYH und in Registerstelle 31 von 403 I BSYS als Zugriffskennungen eingetragen. Ausgezeichnet sind auch die Stellen 0 bis 2 des Registers 404, wobei in 0 und 1 mit LHSH (Load Header Section Host) und LDSH (Load Data Section Host) weitere Kennungen als Datenkennungen eingetragen sind. Diese Datenkennungen sind hier in einfachster Form, nämlich jeweils als ein Bit ausgebildet. In Bitstelle 2 von Register 404 ist mit STXRH (Set Transmission X Request Host) eine Startkennung eingeschrieben. Im Weiteren wird nun der Ablauf des Schreibzugriffs auf den Botschaftsspeicher 300 über den Eingangspuffer 201 beschrieben.

Die Host-CPU 102 schreibt die Daten der zu transferierenden Botschaft in den Eingangspufferspeicher 201. Dabei kann die Host-CPU 102 nur die Konfigurations- und Headerdaten KD einer Botschaft für das Headersegment HS des Botschaftsspeichers 300 oder nur die eigentlichen, zu übertragenden Daten D einer Botschaft für das Datensegment DS des Botschaftsspeichers 300 oder beide schreiben. Welcher Teil einer Botschaft, also Konfigurationsdaten und/oder die eigentlichen Daten, übertragen werden soll, wird durch die speziellen Datenkennungen LHSH und LDSH im Eingangs-Markierungsregister 404 festgelegt. Dabei wird durch LHSH (Load Header Section Host) festgelegt ob die Headerdaten, also die Konfigurationsdaten KD, übertragen werden und durch LDSH (Load Data Section Host) festgelegt, ob die Daten D übertragen werden sollen. Dadurch, dass der Eingangspufferspeicher 201 zweiteilig mit einem Teilpufferspeicher 400 und einem dazugehörigen Schattenspeicher 401 ausgebildet ist und ein wechselseitiger Zugriff erfolgen soll sind als Gegenstück zu LHSH und LDSH zwei weitere Datenkennungsbereiche vorgesehen, die nun auf den Schattenspeicher 401 bezogen sind. Diese Datenkennungen in den Bitstellen 16 und 17 des Registers 404 sind mit LHSS (Load Header Section Shadow) und LDSS (Load Data Section Shadow) bezeichnet. Durch diese wird somit der Übertragungsvorgang bezüglich des Schattenspeichers 401 gesteuert.

Ist nun das Startbit bzw. die Startkennung STXRH (Set Transmission X Request Host) in Bitstelle 2 des Eingangs-Maskierungsregisters 404 gesetzt, so wird nach erfolgtem Transfer der jeweils zu übertragenden Konfigurationsdaten und/oder eigentlichen Daten in den Botschaftsspeicher 300 automatisch eine Sendeanforderung (Transmission Request) für das entsprechende Botschaftsobjekt gesetzt. D. h. durch diese Startkennung STXRH wird das automatische Senden eines übertragenden Botschaftsobjekts gesteuert, insbesondere gestartet.

Das Gegenstück hierzu entsprechend für den Schattenspeicher 401 ist die Startkennung STXRS (Set Transmission X Request Shadow) welches beispielhaft in Bitstelle 18 des Eingangs-Markierungsregisters 404 enthalten ist und auch hier im einfachsten Fall eben als ein Bit ausgebildet ist. Die Funktion von STXRS ist analog der Funktion von STXRH, lediglich bezogen auf den Schattenspeicher 401.

Wenn die Host-CPU 102 die Botschaftskennung, insbesondere die Nummer des Botschaftsobjekts im Botschaftsspeicher 300, in welches die Daten des Eingangspufferspeichers 201 transferiert werden sollen, in die Bitstellen 0 bis 5 des Eingangsanforderungsregisters 403, also nach IBRH, schreibt, werden der Teilpufferspeicher 400 des Eingangspufferspeichers 201 und der zugehörige Schattenspeicher 401 vertauscht bzw. es wird der jeweilige Zugriff von Host-CPU 102 und Botschaftsspeicher 300 auf die beiden Teilspeicher 400 und 401 vertauscht, wie durch die halbkreisförmigen Pfeile angedeutet. Dabei wird z. B. auch der Datentransfer, also die Datenübertragung zum Botschaftsspeicher 300 gestartet. Die Datenübertragung zum Botschaftsspeicher 300 selbst erfolgt aus dem Schattenspeicher 401. Gleichzeitig werden die Registerbereiche IBRH und IBRS getauscht. Ebenso getauscht werden LHSH und LDSH gegen LHSS und LDSS. Gleichermaßen getauscht wird STXRH mit STXRS. IBRS zeigt somit die Kennung der Botschaft, also die Nummer des Botschaftsobjektes für das eine Übertragung, also ein Transfer aus dem Schattenspeicher 401 im Gange ist bzw. welches Botschaftsobjekt, also welcher Bereich im Botschaftsspeicher 300 als letztes Daten (KD und/oder D) aus dem Schattenspeicher 401 erhalten hat. Durch die Kennung (hier wieder beispielsweise 1 Bit) IBSYS (Input Buffer Busy Shadow) in Bitstelle 31 des Eingangs-Anforderungsregisters 403 wird angezeigt ob gerade eine Übertragung mit Beteiligung des Schattenspeichers 401 erfolgt. So wird beispielsweise bei IBSYS=1 gerade aus dem Schattenspeicher 401 übertragen und bei IBSYS=0 eben nicht. Dieses Bit IBSYS wird beispielsweise durch das Schreiben von IBRH, also Bitstellen 0 bis 5, in Register 403 gesetzt, um anzuzeigen, dass ein Transfer zwischen dem Schattenspeicher 401 und dem Botschaftsspeicher 300 im Gange ist. Nach Beendigung dieser Datenübertragung zum Botschaftsspeicher 300 wird IBSYS wieder zurückgesetzt.

Während der Datentransfer aus dem Schattenspeicher 401 gerade läuft kann die Host-CPU 102 die nächste zu transferierende Botschaft in den Eingangspufferspeicher 201 bzw. in den Teilpufferspeicher 400 schreiben. Mit Hilfe einer weiteren Zugriffskennung IBSYH (Input Buffer Busy Host) beispielsweise in Bitstelle 15 von Register 403 kann die Kennung noch weiter verfeinert werden. Schreibt die Host-CPU 102 gerade IBRH, also die Bitstellen 0 bis 5 von Register 403, während eine Übertragung zwischen dem Schattenspeicher 401 und dem Botschaftsspeicher 300 läuft, also IBSYS=1 ist, so wird IBSYH im Eingangs-anforderungsregister 403 gesetzt. Sobald der laufende Transfer, also die laufende Übertragung, abgeschlossen ist, wird der angeforderte Transfer (Anforderung durch STXRH siehe oben) gestartet und das Bit IBSYH zurückgesetzt. Das Bit IBSYS bleibt während der ganzen Zeit gesetzt, um anzuzeigen, dass Daten zum Botschaftsspeicher 300 transferiert werden. Alle verwendeten Bits aller Ausführungsbeispiele können dabei auch als Kennungen mit mehr als einem Bit ausgebildet sein. Vorteilhaft ist die Ein-Bit Lösung aus speicher- und verarbeitungsökonomischen Gründen.

Der so beschriebene Mechanismus erlaubt es der Host-CPU 102 kontinuierlich Daten in die im Botschaftsspeicher 300 befindlichen Botschaftsobjekte bestehend aus Headerbereich HB und Datenbereich DB zu transferieren, vorausgesetzt die Zugriffsgeschwindigkeit der Host-CPU 102 auf den Eingangspufferspeicher 201 ist kleiner oder gleich der internen Datentransferrate des FlexRay-IP-Moduls, also des Kommunikationsbausteins 100.

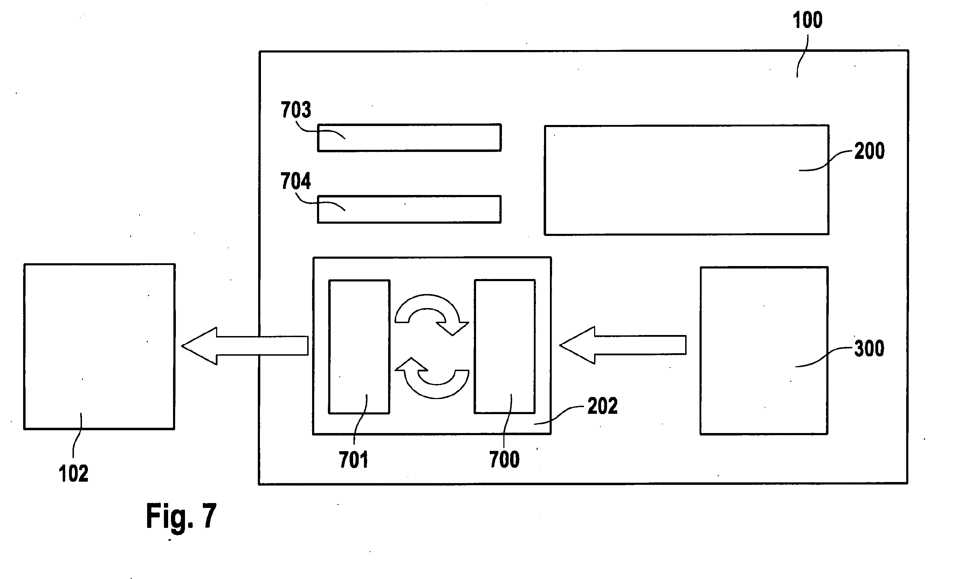

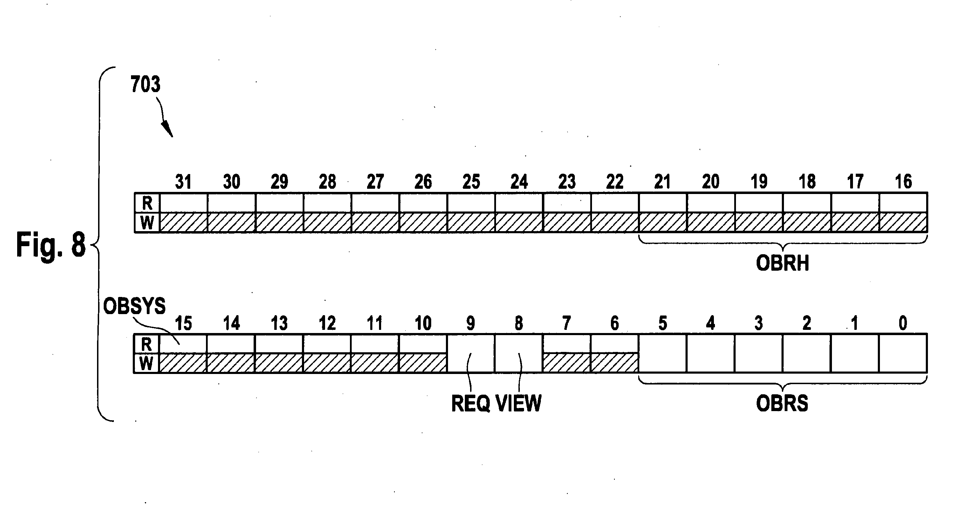

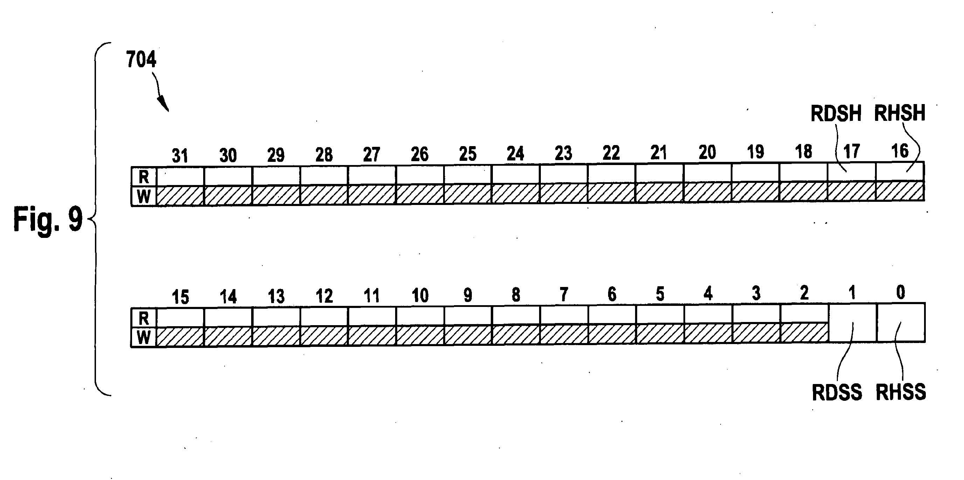

In den Figuren 7, 8 und 9 werden nun die Lesezugriffe auf den Botschaftsspeicher 300 durch die Host-CPU oder Teilnehmer-CPU 102 über den Ausgangspufferspeicher oder Ausgabepufferspeicher 202 näher erläutert. Dazu zeigt Figur 7 noch einmal den Kommunikationsbaustein 100, wobei aus Gründen der Übersichtlichkeit auch hier nur die relevanten Teile des Kommunikationsbausteins 100 gezeigt sind. Dies ist zum einen der für die Steuerung der Abläufe verantwortliche Botschaftsverwalter 200 sowie zwei Kontrollregister 703 und 704, die wie dargestellt außerhalb des Botschaftsverwalter 200 im Kommunikationsbaustein 100 untergebracht sein können, aber auch im Botschaftsverwalter 200 selbst enthalten sein können. 703 stellt dabei das Ausgangs-Anforderungsregister (Output Buffer Command Request Register) dar und 704 das Ausgangs-Maskierungsregister (Output Buffer Command Mask Register). Lesezugriffe der Host-CPU 102 auf den Botschaftsspeicher 300 erfolgen also über den zwischengeschalteten Ausgangspufferspeicher 202 (Output Buffer). Dieser Ausgangspufferspeicher 202 ist nun ebenfalls geteilt bzw. gedoppelt ausgelegt, und zwar als Teilpufferspeicher 701 und einem zu dem Teilpufferspeicher zugehörigen Schattenspeicher 700. Damit kann auch hier wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung nun in der Gegenrichtung vom Botschaftsspeicher 300 zum Host 102 gewährleistet werden. Die Steuerung der Zugriffe erfolgt über das Ausgangs-Anforderungsregister 703 und über das Ausgangs-Maskierungsregister 704. Auch im Register 703 sind mit den Zahlen von 0 bis 31 die jeweiligen Bitstellen in 703 hier beispielhaft für eine Breite von 32 Bit dargestellt (vgl. Figur 8). Gleiches gilt für das Register 704 und die Bitstellen 0 bis 31 in 704 (vgl. Figur 9).

Es erhalten nun beispielhaft die Bitstellen 0 bis 5, 8 und 9, 15 und 16 bis 21 des Registers 703 bezüglich der Ablaufsteuerung des Lesezugriffs eine besondere Funktion. So ist in die Bitstellen 0 bis 5 des Registers 703 eine Kennung OBRS (Output Buffer Request Shadow) als Botschaftskennung eintragbar. Ebenso ist in die Bitstellen 16 bis 21 des Registers 703 eine Kennung OBRH (Output Buffer Request Host) eintragbar. Als Zugriffskennung ist in Bitstellen 15 von Register 703 eine Kennung OBSYS (Output Buffer Busy Shadow) eintragbar. Ausgezeichnet sind auch die Stellen 0 und 1 des Ausgabe-Maskierungsregisters 704, wobei in den Bitstellen 0 und 1 mit RDSS (Read Data Section Shadow) und RHSS (Read Header Section Shadow) weitere Kennungen als Datenkennungen eingetragen sind. Weitere Datenkennungen sind beispielsweise in den Bitstellen 16 und 17 mit RDSH (Read Data Section Host) und RHSH (Read Header Section Host) vorgesehen. Diese Datenkennungen sind auch hier beispielhaft in einfachster Form, nämlich jeweils als ein Bit ausgebildet. In Bitstelle 9 des Registers 703 ist eine Startkennung REQ eingetragen. Weiterhin ist eine Umschaltkennung VIEW vorgesehen die beispielhaft in Bitstelle 8 von Register 703 eingetragen ist.

Die Host-CPU 102 fordert die Daten eines Botschaftsobjekts aus dem Botschaftsspeicher 300 an, indem sie die Kennung der gewünschten Botschaft, also insbesondere die Nummer des gewünschten Botschaftsobjektes, nach OBRS also in die Bitstellen 0 bis 5 des Registers 703 schreibt. Auch hierbei kann die Host-CPU 102 wie in der Gegenrichtung entweder nur die Status- bzw. Konfigurations- und Headerdaten KD einer Botschaft also aus einem Headerbereich oder nur die eigentlich zu übertragenden Daten D einer Botschaft also aus dem Datenbereich oder auch beide lesen. Welcher Teil der Daten also aus Headerbereich und/oder Datenbereich übertragen werden soll wird hierbei vergleichbar mit der Gegenrichtung durch RHSS und RDSS festgelegt. Das heißt RHSS gibt an, ob die Headerdaten gelesen werden sollen und RDSS gibt an, ob die eigentlichen Daten gelesen werden sollen.

Eine Startkennung dient dazu die Übertragung vom Botschaftsspeicher 300 zum Schattenspeicher 700 zu starten. D.h. wird als Kennung wie im einfachsten Fall ein Bit verwendet, wird durch Setzen von Bit REQ in Bitstelle 9 im Ausgabe-Anforderungsregister 703 die Übertragung vom Botschaftsspeicher 300 zum Schattenspeicher 700 gestartet. Die laufende Übertragung wird wieder durch eine Zugriffskennung, hier wieder im einfachsten Fall durch ein Bit OBSYS im Register 703, angezeigt. Um Kollisionen zu vermeiden ist es vorteilhaft, wenn das Bit REQ nur dann gesetzt werden kann, wenn OBSYS nicht gesetzt ist, also gerade keine laufende Übertragung erfolgt. Hier erfolgt dann auch der Botschaftstransfer zwischen dem Botschaftsspeicher 300 und dem Schattenspeicher 700. Der eigentliche Ablauf könnte nun einerseits vergleichbar zur Gegenrichtung wie unter den Figuren 4, 5 und 6 beschrieben gesteuert werden (komplementäre Registerbelegung) und erfolgen oder aber in einer Variation durch eine zusätzliche Kennung, nämlich eine Umschaltkennung VIEW in Bitstelle 8 des Registers 703. D.h. nach Abschluss der Übertragung wird das Bit OBSYS zurückgesetzt und durch Setzen des Bits VIEW im Ausgabe-Anforderungsregister 703 werden der Teilpufferspeicher 701 und der zugehörige Schattenspeicher 700 getauscht bzw. es werden die Zugriffe darauf getauscht und die Host-CPU 102 kann nun das vom Botschaftsspeicher 300 angeforderte Botschaftsobjekt, also die entsprechende Botschaft, aus dem Teilpufferspeicher 701 auslesen. Dabei werden auch hier vergleichbar mit der Gegenübertragungsrichtung in den Figuren 4 bist 6 die Registerzellen OBRS und OBRH getauscht. Gleichermaßen werden RHSS und RDSS gegen RHSH und RDSH getauscht. Als Schutzmechanismus kann auch hier vorgesehen werden, dass das Bit VIEW nur dann gesetzt werden kann, wenn OBSYS nicht gesetzt ist, also keine laufende Übertragung stattfindet.

Somit erfolgen Lesezugriffe der Host-CPU 102 auf den Botschaftsspeicher 300 über den zwischengeschalteten Ausgangspufferspeicher 202. Dieser Ausgangspufferspeicher 202 ist ebenso wie der Eingangspufferspeicher 201 doppelt bzw. zweiteilig ausgelegt, um einen kontinuierlichen Zugriff der Host-CPU 102 auf die Botschaftsobjekte, die im Botschaftsspeicher 300 abgelegt sind, zu gewährleisten. Auch hier werden die Vorteile der hohen Datenintegrität und der beschleunigten Übertragung erzielt.

Durch die Verwendung der beschriebenen Eingangs- und Ausgangspuffer 201, 202 wird sichergestellt, dass eine Host-CPU 102 trotz der modulinternen Latenzzeiten unterbrechungsfrei auf den Botschaftsspeicher 300 zugreifen kann.

Zur Sicherstellung dieser Datenintegrität wird die Datenübertragung, insbesondere die Weiterleitung im Kommunikationsbaustein 100, durch den Botschaftsverwalter 200 (Message Handler MHD) vorgenommen. Dazu ist in Figur 10 der Botschaftsverwalter 200 dargestellt. Der Botschaftsverwalter 200 ist in seiner Funktionalität durch mehrere Zustandsmaschinen oder Zustandsautomaten, also endliche Automaten, so genannte Finite-State-Machinen (FSM) darstellbar. Dabei sind wenigstens drei Zustandsmaschinen und in einer besonderen Ausführungsform vier Finite-State-Machinen vorgesehen. Eine erste Finite-State-Machine ist die IOBF-FSM und mit 501 bezeichnet (Input/Output Buffer State Machine). Diese IOBF-FSM könnte auch je Übertragungsrichtung bezüglich des Eingangspufferspeichers 201 oder des Ausgangspufferspeichers 202 in zwei Finite-State-Machinen aufgeteilt sein IBF-FSM (Input Buffer FSM) und OBF-FSM (Output Buffer FSM), womit maximal fünf Zustandsautomaten (IBF-FSM, OBF-FSM, TBF1-FSM, TBF2-FSM, AFSM) denkbar wären. Bevorzugt ist aber eine gemeinsame IOBF-FSM vorzusehen. Eine zweite Finite-State-Machine ist hier im Zuge des bevorzugten Ausführungsbeispiels in zwei Blöcke 502 und 503 aufgeteilt und bedient die beiden Kanäle A und B bezüglich der Speicher 205 und 206, wie zu Fig. 2 beschrieben. Dabei kann eine Finite-State-Machine vorgesehen sein, um beide Kanäle A und B zu bedienen, oder aber wie in der bevorzugten Form eine Finite-State-Machine TBF1-FSM mit 502 bezeichnet (Transient Buffer 1 (206, RAM A) State Machine) für Kanal A und für Kanal B eine TBF2-FSM mit 503 bezeichnet (Transient Buffer 2 (205, RAM B) State Machine).

Zur Steuerung des Zugriffs der drei Finite-State-Machinen 501-503 im bevorzugten Ausführungsbeispiel dient eine Arbiter-Finite-State-Machine, die so genannte AFSM, die mit 500 bezeichnet ist. Die Daten (KD und/oder D) werden in einem durch ein Taktmittel, wie z.B. ein VCO (Voltage Controlled Oszillator), einen Schwingquarz usw., generierten oder aus diesem angepassten Takt im Kommunikationsbaustein 100 übertragen. Der Takt T kann dabei im Baustein generiert werden oder von außen, z.B. als Bustakt, vorgegeben sein. Diese Arbiter-Finite-State-Machine AFSM 500 gibt abwechselnd einer der drei Finite-State-Machinen 501-503, insbesondere jeweils für eine Taktperiode T Zugriff auf den Botschaftsspeicher 300. D.h. die zur Verfügung stehende Zeit wird entsprechend den Zugriffsanforderungen der einzelnen Zustandsautomaten 501, 502, 503 auf diese anfordernden Zustandsautomaten aufgeteilt. Erfolgt eine Zugriffsanforderung von nur einer Finite-State-Machine, so erhält diese 100% der Zugriffszeit, also alle Takte T. Erfolgt eine Zugriffsanforderung von zwei Zustandsautomaten, erhält jede Finite-State-Machine 50% der Zugriffszeit. Erfolgt schließlich eine Zugriffsanforderung von drei Zustandsautomaten so erhält jede der Finite-State-Machinen 1/3 der Zugriffszeit. Dadurch wird die jeweils zur Verfügung stehende Bandbreite optimal genutzt.

Die erste Finite-State-Machine 501, also IOBF-FSM, führt bei Bedarf folgende Aktionen aus:
- Datentransfer vom Eingangspufferspeicher 201 zum ausgewählten Botschaftsobjekt im Botschaftsspeicher 300.
- Datentransfer vom ausgewählten Botschaftsobjekt im Botschaftsspeicher 300 zum Ausgangspufferspeicher 202.

Die Zustandsmaschine 502 für Kanal A, also TBF1-FSM, führt folgende Aktionen aus:
- Datentransfer vom ausgewählten Botschaftsobjekt im Botschaftsspeicher 300 zum Pufferspeicher 206 von Kanal A.
- Datentransfer vom Pufferspeicher 206 zum ausgewählten Botschaftsobjekt im Botschaftsspeicher 300.
- Suche nach dem passenden Botschaftsobjekt im Botschaftsspeicher 300, wobei bei Empfang das Botschaftsobjekt (Receive Buffer) zum Abspeichern einer auf Kanal A empfangenen Botschaft im Rahmen einer Akzeptanzfilterung gesucht wird und beim Senden das nächste auf Kanal A zu sendende Botschaftsobjekt (Transmit Buffer).

Analog dazu ist die Aktion von TBF2-FSM, also der Finite-State-Machine für Kanal B in Block 503. Diese führt den Datentransfer vom ausgewählten Botschaftsobjekt im Botschaftsspeicher 300 zum Pufferspeicher 205 von Kanal B aus und den Datentransfer vom Pufferspeicher 205 zum ausgewählten Botschaftsobjekt im Botschaftsspeicher 300. Auch die Suchfunktion ist analog zu TBF1-FSM nach einem passenden Botschaftsobjekt im Botschaftsspeicher 300, wobei bei Empfang das Botschaftsobjekt (Receive Buffer) zum Abspeichern einer auf Kanal B empfangenen Botschaft im Rahmen einer Akzeptanzfilterung gesucht wird und beim Senden die nächste auf Kanal B zu sendende Botschaft oder Botschaftsobjekt (Transmit Buffer).

In Figur 11 sind nun noch einmal die Abläufe und die Übertragungswege dargestellt. Die drei Zustandsmaschinen 501-503 steuern die jeweiligen Datenübertragungen zwischen den einzelnen Teilen. Dabei ist mit 102 wieder die Host-CPU dargestellt, mit 201 der Eingangspufferspeicher und mit 202 der Ausgangspufferspeicher. Mit 300 ist der Botschaftsspeicher dargestellt und die beiden Pufferspeicher für Kanal A und Kanal B mit 206 und 205. Die Schnittstellenelemente 207 und 208 sind ebenfalls dargestellt. Der erste Zustandsautomat IOBF-FSM, mit 501 bezeichnet steuert den Datentransfer Z1A und Z1B, also vom Eingangspufferspeicher 201 zum Botschaftsspeicher 300 und vom Botschaftsspeicher 300 zum Ausgangspufferspeicher 202. Die Datenübertragung erfolgt dabei über Datenbusse mit einer Wortbreite von beispielsweise 32 Bit wobei auch jede andere Bitzahl möglich ist. Gleiches gilt für die Übertragung Z2 zwischen dem Botschaftsspeicher und dem Pufferspeicher 206. Diese Datenübertragung wird durch TBFI-FSM, also die Zustandsmaschine 502 für Kanal A, gesteuert. Die Übertragung Z3 zwischen Botschaftsspeicher 300 und Pufferspeicher 205 wird durch den Zustandsautomaten TBF2-FSM, also 503 gesteuert. Auch hier erfolgt der Datentransfer über Datenbusse mit einer beispielhaften Wortbreite von 32 Bit, wobei auch hier jede andere Bitzahl möglich ist. Normalerweise benötigt der Transfer eines kompletten Botschaftsobjektes über die genannten Übertragungswege mehrere Taktperioden T. Daher erfolgt eine Aufteilung der Übertragungszeit bezogen auf die Taktperioden T durch den Arbiter, also die AFSM 500. In Figur 11 sind also die Datenpfade zwischen denen vom Message Handler 200 kontrollierten Speicherkomponenten dargestellt. Um die Datenintegrität der im Botschaftsspeicher 300 gespeicherten Botschaftsobjekte sicherzustellen, sollten vorteilhafterweise zur gleichen Zeit nur auf einem der dargestellten Pfade also Z1A und Z1B sowie Z2 und Z3 gleichzeitig Daten ausgetauscht werden.

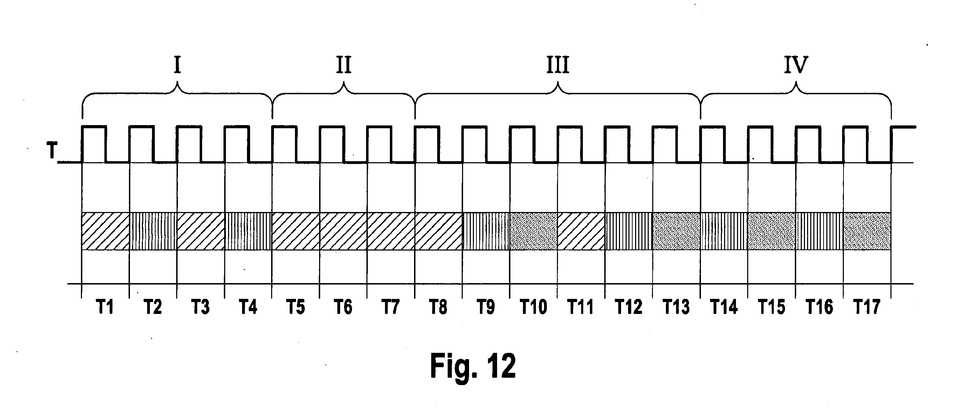

In Figur 12 ist an einem Beispiel gezeigt, wie die zur Verfügung stehenden Systemtakte T vom Arbiter, also der AFSM 500, auf die drei anfordernden Zustandsautomaten aufgeteilt werden. In Phase 1 (I) erfolgen Zugriffsanforderungen von Zustandsautomat 501 und Zustandsautomat 502, d.h., dass die gesamte Zeit jeweils zur Hälfte auf die beiden anfordernden Zustandautomaten aufgeteilt wird. Bezogen auf die Taktperioden in Phase 1 (I) bedeutet dies, dass Zustandsautomat 501 in den Taktperioden T1 und T3 Zugriff erhält und Zustandsautomat 502 in den Taktperioden T2 und T4. In Phase 2 (II) erfolgt der Zugriff nur durch die Zustandsmaschine 501, sodass alle drei Taktperioden, also 100% der Zugriffszeit von T5 bis T7 auf IOBF-FSM entfällt. In Phase 3 (III) erfolgen Zugriffsanforderungen aller drei Zustandsautomaten 501 bis 503, sodass eine Drittelung der Gesamtzugriffszeit erfolgt. Der Arbiter AFSM 500 verteilt dann die Zugriffszeit beispielsweise so, dass in den Taktperioden T8 und T11 die Finit-State-Machine 501, in den Taktperioden T9 und T12 die Finite-State-Machine 502 und in den Taktperioden T10 und T13 die Finite-State-Machine 503 Zugriff erhält. In Phase 4 (IV) schließlich erfolgt der Zugriff durch zwei Zustandsautomaten, 502 und 503 auf den beiden Kanälen A und B des Kommunikationsbausteins 100, sodass eine Zugriffsverteilung der Taktperioden T14 und T16 an Finite-State-Machine 502 und in T15 und T17 an Finite-State-Machine 503 erfolgt.

Der Arbiterzustandsautomat AFSM 500 sorgt also dafür, dass falls mehr als eine der drei Zustandsmaschinen 501-503 eine Anforderung für einen Zugriff auf den Botschaftsspeicher 300 stellt, der Zugriff taktweise und abwechselnd auf die anfordernden Zustandsmaschinen 501-503 aufgeteilt wird. Diese Vorgehensweise stellt die Integrität der im Botschaftsspeicher 300 abgelegten Botschaftsobjekte, also die Datenintegrität, sicher. Will zum Beispiel die Host-CPU 102 über den Ausgangspufferspeicher 202 ein Botschaftsobjekt auslesen während gerade eine empfangene Botschaft in dieses Botschaftsobjekt geschrieben wird, so wird abhängig davon welche Anforderung zuerst gestartet wurde entweder der alte Stand oder der neue Stand ausgelesen, ohne dass die Zugriffe im Botschaftsobjekt im Botschaftsspeicher 300 selbst kollidieren.

Das beschriebene Verfahren ermöglicht der Host-CPU 102 im laufenden Betrieb jedes beliebige Botschaftsobjekt im Botschaftsspeicher 300 zu lesen oder zu schreiben, ohne dass das ausgewählte Botschaftsobjekt für die Dauer des Zugriffs der Host-CPU 102 von der Teilnahme am Datenaustausch auf beiden Kanälen des FlexRay Busses 101 gesperrt wäre (Buffer Locking). Gleichzeitig wird durch die taktweise Verschachtelung der Zugriffe die Integrität der im Botschaftsspeicher 300 abgelegten Daten sichergestellt und die Übertragungsgeschwindigkeit, auch durch Ausnutzung der vollen Bandbreite erhöht.

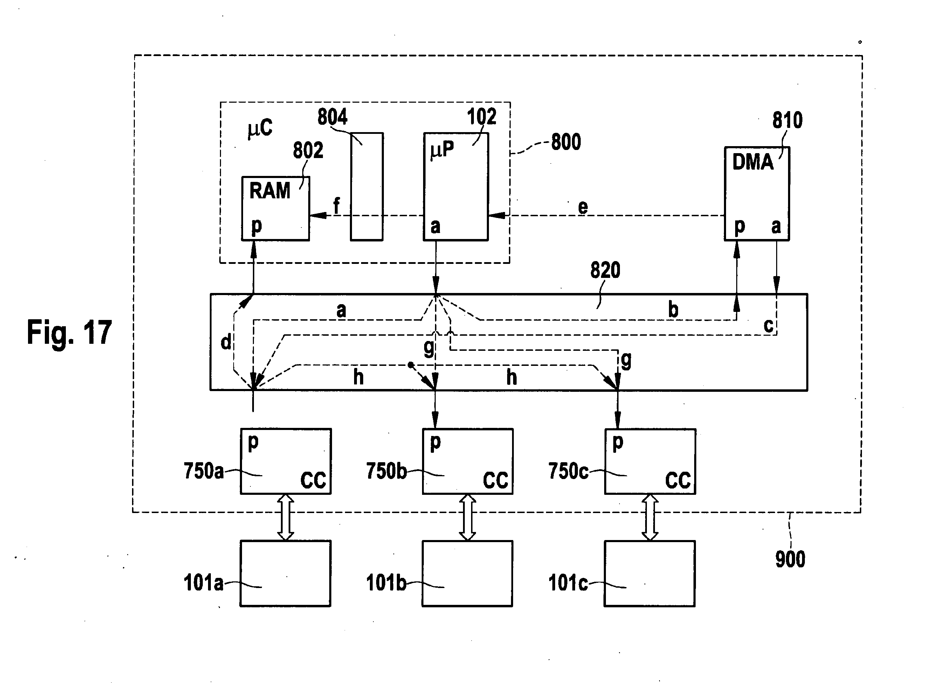

Bisher wurde sowohl der Teilnehmer als auch der Mikroprozessor (die Host-CPU) des Teilnehmers mit dem Bezugszeichen 102 bezeichnet und in der Beschreibung als Äquivalente dargestellt. Für die nachfolgende Beschreibung der Erfindung ist jedoch eine Differenzierung erforderlich. Im weiteren wird deshalb für den gesamten FlexRay-Teilnehmer das Bezugszeichen 900 eingeführt, während mit dem Bezugszeichen 102 lediglich der Mikroprozessor (die Host-CPU) des Teilnehmers 900 bezeichnet wird. Zur näheren Erläuterung wird auf Figur 17 verwiesen, wo ein aus dem Stand der Technik bekannter Teilnehmer 900 dargestellt ist.

Der bekannte Teilnehmer 900 umfasst einen Mikrocontroller 800, einen DMA (Direct Memory Access)-Controller 810, einen Peripherie-Bus 820 und mehrere, in dem dargestellten Ausführungsbeispiel drei, FlexRay-Kommunikationscontroller 750a, 750b, 750c. Der Peripherie-Bus 820 kann als ein beliebiger interner Datenbus ausgebildet sein. Als Peripherie-Busse werden häufig proprietäre Datenbusse eingesetzt, da das gesamte mit 900 bezeichnete Bauteil in der Regel von ein und demselben Halbleiterhersteller gefertigt wird. Es müssen also lediglich die internen Bauelemente 800, 810 und 750 in dem Bauteil 900 über den Peripherie-Bus 820 kommunizieren.

Der Einsatz eines DMA-Controllers 810 ist fakultativ. Es sind auch Teilnehmer 900 bekannt, bei denen die Datenübertragung zwischen dem Mikrocontroller 800 und einem der Kommunikationscontroller 750 bzw. zwischen den Kommunikationscontrollern 750 ohne einen DMA-Controller 810 funktioniert.

Der Mikrocontroller 800 umfasst den Mikroprozessor 102 (Host-CPU), ein Speicherelement 802 sowie einen Core-Bus 804. Das Speicherelement 802 kann bspw. als "dual ported tightly coupled memory" (TCM) ausgeführt werden. Der Mikrocontroller 800 ist über eine aktive Schnittstelle "a" des Mikroprozessors 102 und eine passive Schnittstelle "p" des Speicherelements 802 an den Peripherie-Bus 820 angeschlossen. Auch der DMA-Controller 810 ist - sofern vorhanden - über eine aktive Schnittstelle "a" und eine passive Schnittstelle "p" an den Peripherie-Bus 820 angeschlossen. Die Kommunikationscontroller 750 sind bei dem bekannten Teilnehmer 900 jedoch lediglich über eine passive Schnittstelle "p" an den Peripherie-Bus 820 angeschlossen. Mit anderen Worten sind also der Mikrocontroller 800 und der DMA-Controller 810 als Master an den Peripherie-Bus 820 angeschlossen, wohingegen die Kommunikationscontroller 750 lediglich als Slaves an den Bus 820 angeschlossen sind.

Der Mikroprozessor 102 konfiguriert, kontrolliert und steuert die einzelnen Kommunikationscontroller 750. Der Mikroprozessor 102 liest empfange Botschaften aus, bearbeitet und bewertet sie, berechnet und erzeugt neue Botschaften und sorgt für das Schreiben der Botschaften zum Versand über die Kommunikationsverbindung 101. So ist es zum Beispiel bei einfachen Gateway-Operationen oftmals erforderlich, die empfangenen Daten aus einem der Kommunikations-controller 750 auszulesen und in einen oder mehrere andere Kommunikations-controller 750 zum Versand zu schreiben. Zur Realisierung einer Gateway-Funktionalität innerhalb des Teilnehmers 900 ohne den Einsatz eines DMA-Controllers 810 überträgt der Mikroprozessor 102 die Daten wortweise aus den Kommunikationscontrollern 750 (gestrichelte Linie a) in das Speicherelement 802 des Mikrocontrollers 800 (gestrichelte Linie f) oder einen CPU-internen Speicher (nicht dargestellt), um sie gegebenenfalls zu bearbeiten und anschließend in die entsprechenden Kommunikationscontroller 750 zu kopieren (gestrichelte Linien g). Dabei treten bei den heute üblichen hohen Taktraten des Mikroprozessors 102 mehrere Wartezyklen auf, während denen der Mikroprozessor 102 auf das Ende der Datenübertragung wartet, d.h. blockiert ist, und keinen anderen Aufgaben nachgehen kann.

Falls ein DMA-Controller 810 zum Einsatz kommt, kann dieser den Datentransfer zwischen dem Speicherelement 802 des Mikrocontrollers 800 und den Kommunikationscontrollern 750 durchführen. Er wird dazu von dem Mikroprozessor 102 konfiguriert und gestartet (gestrichelte Linie b). Danach überträgt der DMA-Controller 810 Daten wortweise aus den Kommunikationscontrollern 750 (gestrichelte Linie c) in den Speicher 802 des Mikrocontrollers 800 (gestrichelte Linie d) oder direkt zwischen den Kommunikationcontrollern 750 (gestrichelte Linie h). Das Ende der Datenübertragung wird dem Mikroprozessor 102 mittels eines Interrupts mitgeteilt (gestrichelte Linie e), woraufhin der Mikroprozessor 102 den Prozess für die nächste Botschaft neu beginnt. Das Abarbeiten von Interrupts erzeugt eine große Anzahl von CPU-Befehlen, durch die ein großer Teil der Rechen- und Speicherressourcen des Mikroprozessors 102 gebunden ist. Außerdem steigt durch häufige Interrupts der mögliche Jitter (zeitliche Unsicherheit bzgl. der Ausführungsdauer) von unterbrochenen Software-Tasks an.

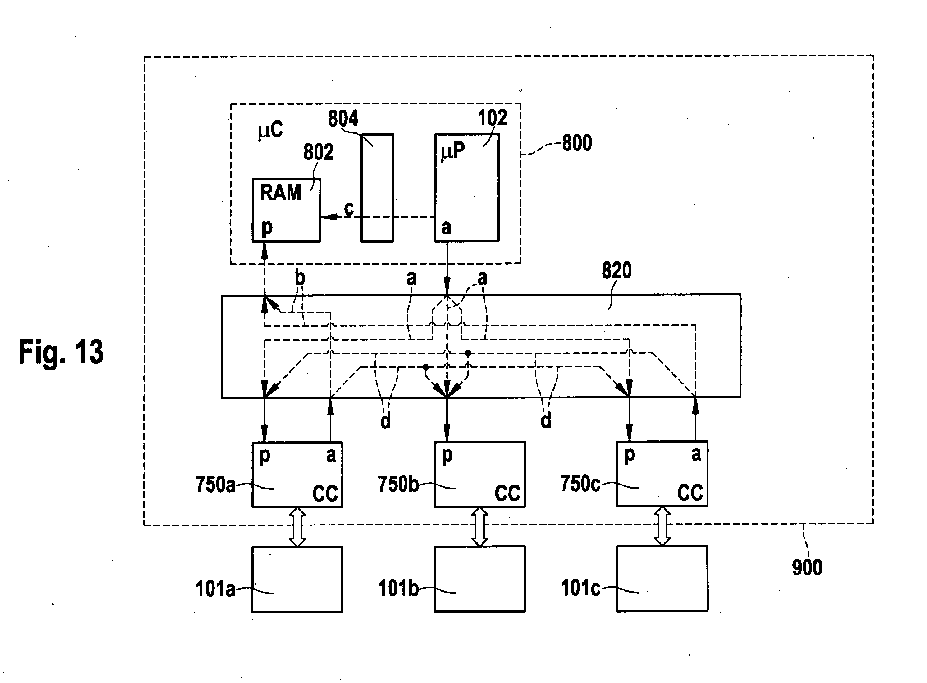

In Figur 13 ist ein erfindungsgemäßer Teilnehmer 900 eines FlexRay-Kommunikationssystems dargestellt. Es ist deutlich zu erkennen, dass zwei der Kommunikationscontroller 750, nämlich der Kommunikationscontroller 750a und der Kommunikationscontroller 750c, sowohl über eine passive Schnittstele "p" als auch über eine aktive Schnittstelle "a" an den Peripherie-Bus 820 angeschlossen sind. Das bedeutet, dass die Kommunikationscontroller 750a, 750c nicht als Slaves, sondern als Masters an den Peripherie-Bus 820 angeschlossen sind. Somit können die Kommunikationscontroller 750a, 750c nicht nur Befehle und Daten von anderen an den Peripherie-Bus 820 angeschlossenen Modulen (z. B. Mikrocontroller 800 oder andere Kommunikationscontroller 750) empfangen und verarbeiten, sondern selbst empfangene Botschaften (Daten und Befehle) bewerten, neue Botschaften berechnen und diese über den Peripherie-Bus 820 an den Mikrocontroller 800 oder andere Kommunikationscontroller 750 versenden.

Der Mikroprozessor 102 konfiguriert und kontrolliert die Kommunikationscontroller 750 sowie die Konfigurationsdaten der aktiven Schnittstellen "a" (gestrichelte Linie a). Der Mikroprozessor 102 liest bereits empfangene und automatisch in das Speicherelement 802 kopierte (gestrichelte Linie b) Botschaftsobjekte aus, bewertet und bearbeitet sie (gestrichelte Linie c), berechnet und erzeugt neue Botschaftsobjekte und legt sie im Speicherelement 802 ab (gestrichelte Linie c). Außerdem werden Informationen an die entsprechenden Kommunikationscontroller 750 gegeben, dass diese die aktuellen Daten aus dem Speicherelement 802 in ihren eigenen Botschaftsspeicher 300 transferieren können (gestrichelte Linie a). Der Transfer wird automatisiert von den Kommunikationscontrollern 750a, 750c durchgeführt. Der Botschaftsspeicher 300 speichern die Botschaftsobjekte (sog. Message Buffer) zusammen mit Konfigurations- und Statusinformationen.

Zusätzlich zu der aus dem Stand der Technik bekannten Implementierung besitzen die Kommunikationscontroller 750a, 750c jeweils eine aktive Schnittstelle "a", über die eine in dem Controller 750 eingebettete Logik selbstständig sowohl Botschaftsobjekte aus dem Botschaftsspeicher 300 auslesen und an ein entsprechendes Ziel (in das Speicherelement 802 oder in den Botschaftsspeicher 300 anderer Kommunikationscontroller 750) schreiben als auch Botschaftsobjekte aus einer Quelle (dem Speicherelement 802 oder dem Botschaftsspeicher 300 anderer Kommunikationscontroller 750) auslesen und in den Botschaftsspeicher 300 schreiben kann. Das Routing in das und aus dem Speicherelement 802 ist mit der gestrichelten Linie b und das Routing zwischen den Kommunikationscontrollern mit der gestrichelten Linie d verdeutlicht. Das aktive Interface "a" der Kommunikationscontroller 750a, 750c ist dabei derart ausgelegt, dass es selbstständig (auch ohne Triggerung durch einen steuernden Mikrocontroller 800 oder eine andere steuernde Einheit) Daten von anderen Modulen (bspw. aus Kommunikationscontroller 750b) anfordern kann. Es ist für die Erfindung nicht erforderlich, dass alle Module eine aktive Schnittstelle "a" aufweisen.

Zum Starten der Datenübertragung können die Kommunikationscontroller 750a, 750c mit einer aktiven Schnittstelle "a" regelmäßig prüfen, ob in dem Speicherelement 802 des Mikrocontrollers 800 oder in dem Botschaftsspeicher 300 eines der Kommunikationscontroller 750 neue Daten eingegangen sind. Insbesondere wird geprüft, ob ein neues Botschaftsobjekt im Speicherelement 802 abgelegt wurde und/oder ob ein Kontrollregister 703, 704 für einen Ausgangspufferspeicher (Output-Buffer; OBF) 202 des Botschaftsspeichers 300 eines der Kommunikationscontroller 750 ein neues Botschaftsobjekt anzeigt.

Das erfindungsgemäße Verfahren zum aktiven Kopieren von Daten aus dem Botschaftsspeicher des Kommunikationscontrollers 750a in einen und/oder aus einem Botschaftsspeicher eines anderen Kommunikationscontrollers 750b, 750c kann zeitgesteuert (z.B. periodisch), durch den Empfang von Daten, insbesondere einer Botschaft, durch eine Änderung von empfangenen Daten, durch Triggerung durch einen der anderen Kommunikationscontroller 750b, 750c, oder durch Triggerung durch den Mikroprozessor 102 des Kommunikationscontrollers 750a ausgelöst/ getriggert werden. Die Triggerung umfasst üblicherweise die Übermittlung eines besonderen Auslöse-Befehls an die Logik.

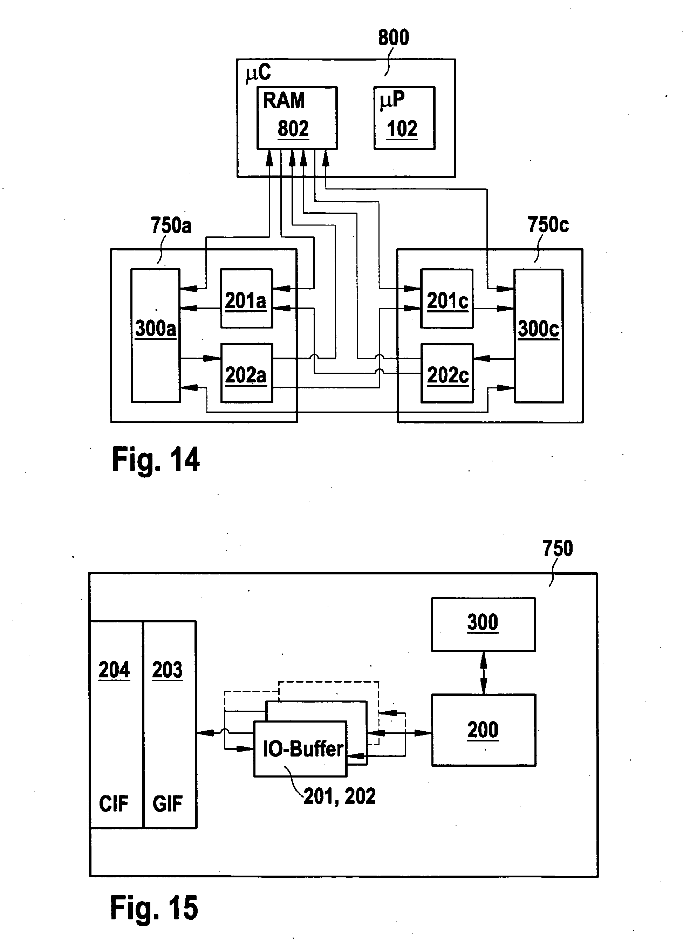

In Figur 14 sind mögliche Übertragungswege für geroutete Daten in dem erfindungsgemäßen Teilnehmer 900 dargestellt. Wie bereits weiter oben beschrieben, umfassen die Kommunikationscontroller 750 einen Botschaftsspeicher 300 und können Pufferspeicher, insbesondere mindestens einen Eingangspufferspeicher 201 und mindestens einen Ausgangspufferspeicher 202, umfassen. Abhängig von der konkreten Ausgestaltung der Kommunikationscontroller 750, kann nun bspw. die Logik des Kommunikationscontrollers 750a mit einer aktiven Schnittstelle "a" Daten auf den nachfolgend aufgeführten Übertragungswegen routen:
- zwischen dem Botschaftsspeicher 300a und dem Speicherelement 802 des Mikrocontrollers 800, (in der Regel nur während der Initialisierung des Kommunikationsbausteins 100, ansonsten spezielle Auslegung der Hardware erforderlich),
- aus dem Speicherelement 802 in den Eingangspufferspeicher 201a,
- aus dem Ausgangspufferspeicher 202c des anderen Kommunikationscontrollers 750c in den Eingangspufferspeicher 201a,
- aus dem Ausgangspufferspeicher 202a in das Speicherelement 802,
- aus dem Ausgangspufferspeicher 202a in den Eingangspufferspeicher 201c des anderen Kommunikationscontrollers 750c,
- aus den Botschaftsspeichern 300a und 300c in den Ausgangspufferspeicher 202a bzw. 202c, und
- aus den Eingangspufferspeichern 201a und 201c in den Botschaftsspeicher 300a bzw. 300c.

In entsprechender Weise kann die Logik des anderen Kommunikationscontrollers 750c mit einer aktiven Schnittstelle "a" Daten auf den nachfolgend aufgeführten Übertragungswegen routen:
- zwischen dem Botschaftsspeicher 300c und dem Speicherelement 802 des Mikrocontrollers 800 (in der Regel nur während der Initialisierung des Kommunikationsbausteins),
- aus dem Speicherelement 802 in den Eingangspufferspeicher 201c,
- aus dem Ausgangspufferspeicher 202a des Kommunikationscontrollers 750a in den Eingangspufferspeicher 201c,
- aus dem Ausgangspufferspeicher 202c in das Speicherelement 802,
- aus dem Ausgangspufferspeicher 202c in den Eingangspufferspeicher 201a des Kommunikationscontrollers 750a,
- aus den Botschaftsspeichern 300a und 300c in den Ausgangspufferspeicher 202a bzw. 202c, und
- aus den Eingangspufferspeichern 201a und 201c in den Botschaftsspeicher 300a bzw. 300c.

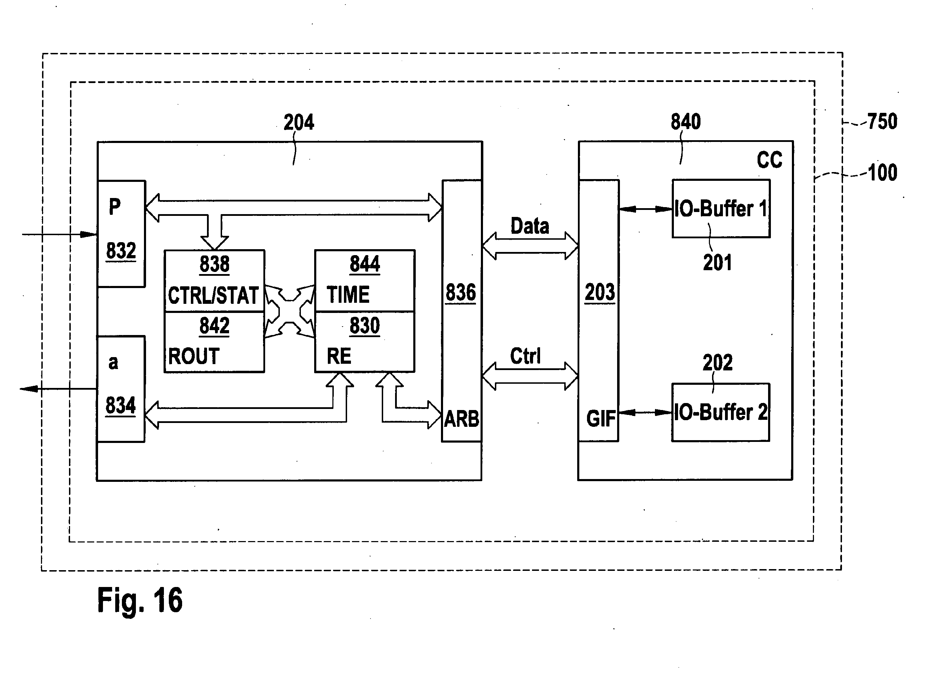

In Figur 15 ist ein Blockdiagramm eines erfindungsgemäßen Kommunikationscontrollers 750 mit einer aktiven Schnittstelle "a" dargestellt. Die teilnehmer- bzw. kundenspezifische Schnittstelle 204 ist im Detail in Figur 16 dargestellt. Insgesamt zeigt Figur 16 einen erfindungsgemäßen Kommunikationscontroller 750, wie er bspw. in einem Teilnehmer 900 gemäß Figur 13 eingesetzt wird. Der FlexRay-Kommunikationscontroller 750 umfasst einen FlexRay-Kommunikationsbaustein 100, wie er weiter oben ausführlich beschrieben wurde. Der Kommunikationsbaustein 100 ist - wie gesagt - unterteilt in einen generischen Teil, der in Figur 16 mit dem Bezugszeichen 840 bezeichnet ist und der unabhängig von dem angeschlossenen Mikrocontroller 800 immer gleich ausgestaltet werden kann, und in einen kunden- oder teilnehmerspezifischen Teil 204. Der generische Teil 840 wird auch als Kommunikationscontroller-Core bezeichnet. Von dem generischen Teil 840 des Kommunikationsbausteins 100 sind in Figur 16 beispielhaft nur das generische Interface 203 (GIF) sowie die dem Botschaftsspeicher 300 vorgelagerten Pufferspeicher 201, 202 dargestellt. Der Eingangspufferspeicher 201 dient zum Zwischenspeichern von Botschaften für den Transfer zum Botschaftsspeicher 300. Der Ausgangspufferspeicher 202 dient zum Zwischenspeichern von Botschaften für den Transfer vom Botschaftsspeicher 300 zum Mikrocontroller c 800 oder zu einem Botschaftsspeicher 300 eines anderen Kommunikationscontrollers 750 des Teilnehmers 900. Selbstverständlich kann der Kommunikationsbaustein 100 aus Figur 16 alle oder nur einige der in Figur 2 dargestellten Elemente umfassen.

Der generische Teil 840 des Kommunikationsbausteins 100 ist über das generische Interface 203 (GIF) an das teilnehmerspezifische Interface 204 (CIF) des teilnehmerspezifischen Teils des Kommunikationsbausteins 100 angeschlossen. Das generische Interface 203 lässt sich über das teilnehmerspezifische Interface 204 an verschiedene kundenspezifische Host-CPUs 102 anschließen. Die Logik des Kommunikationscontrollers 750 ist in dem teilnehmerspezifischen Interface 204 (CIF) in Form einer sog. Routing-Maschine 830 (Routing-Engine; RE) ausgebildet. Das teilnehmerspezifische Interface 204 (CIF) verbindet den peripheren Datenbus 820 des Mikroprozessors 102 mit dem generischen Interface 203 (GIF) des FlexRay-Kommunikationscotroller-Cores 840. Darüber hinaus ist ein Kontroll- und Statusregister 838, in dem Kontroll-und Statusinformationen abgelegt sind, sowie ein Routing-Speicher 842 vorgesehen, in dem Routinginformationen abgelegt sind. Die Register 838 und der Speicher 842 können als bestimmte Speicherbereiche eines Speicherelements oder als Flip-Flops ausgebildet sein.

Mit den Bezugszeichen 832 und 834 sind die passive Schnittstelle "p" bzw. die aktive Schnittstelle "a" des Kommunikationscontrollers 750 bezeichnet. Die passive Schnittstelle 832 verbindet den Kommunikationscontroller 750 mit einer aktiven Schnittstelle "a" eines anderen Moduls (z.B. des Mikrocontrollers 800 oder eines der Kommunikationscontroller 750a, 750c mit einer aktiven Schnittstelle 834). Sie kann selbst keinen Transfer initiieren und muss somit immer durch ein anderes Modul getriggert werden. Über die passive Schnittstelle 832 kann das aktive Modul auf den Kommunikationscontroller 750, die Kontroll-und Statusinformationen in dem Kontroll- und Statusregister 838 und auf die Routinginformationen in dem Routing-Speicher 842 zugreifen. Das passive Interface 832 ist abhängig von dem benutzten On-Chip Peripherie-Bus 820.

Die aktive Schnittstelle 834 kann selbstständig den Datentransfer starten. Dazu kann sie selbst Daten aus anderen Modulen (z.B. dem Mikrocontroller 800 oder einem der Kommunikationscontroller 750) anfordern oder in andere Speicherbereiche (z.B. das Speicherelement 802 oder einen Botschaftsspeicher 300 eines anderen Kommunikationscontrollers 750) Daten schreiben. Es ist dabei unerheblich, ob es sich bei der Gegenstelle um ein aktives oder passives Modul handelt. Die Schnittstelle 834 ist unter ausschließlicher Kontrolle der Routing-Engine 830. Die Konfiguration der aktiven Schnittstelle 834 erfolgt über das Kontroll- und Statusregister 838 durch den Mikroprozessor 102 (Host-CPU). Das aktive Interface 834 ist abhängig von dem benutzten On-Chip Peripherie-Bus 820.

Die Routing-Engine 830 umfasst eine Zustandsmaschine, die selbstständig den Transfer einer Nachricht auslösen kann. Das Auslösen eines Datentransfers erfolgt bspw. zeitgesteuert über einen integrierten Timer 844 oder durch den Empfang einer Nachricht oder Triggerung durch ein anderes Modul mit einer aktiven Schnittstelle "a" (z.B. den Mikroprozessor 102 nach der Bearbeitung einer Nachricht). Sie steuert das Laden/Speichern der Nachricht im Kommunikationscontroller 750 sowie den Transfer zu/von einem Modul. Die Routing-Engine 830 ist in der Lage durch entsprechende Kopier- und Verschiebeoperationen neue Nachrichten aus Teilen bestehender Nachrichten zusammenzustellen, die entweder im Speicherelement 802 oder in einem Botschaftsspeicher 300 anderer Kommunikationscontroller 750 abgelegt sind oder abgelegt werden.

Zur Steuerung des Datentransfers werden beim Start durch den Mikroprozessor 102 (Host-CPU) entsprechende Routinginformationen in einen Speicherbereich 842 geschrieben. Mit diesen Informationen kann die Routing-Engine beim Empfang einer Nachricht oder zeitgesteuert einen Datentransfer auslösen. Zusätzlich können andere Module Anweisungen zur Bearbeitung einer Nachricht ablegen, die von der Routing-Engine 830 dann ausgeführt werden. Zur Steuerung, (De-)Aktivierung und Anzeige von Eigenschaften/ Zuständen sind Kontroll- und Statusinformationen enthalten.

Ein Arbiter 836 kontrolliert konkurrierende Anfragen nach Zugriffen des Mikroprozessors 102 (über das passive Interface 832) und der Routing-Engine 830 auf das generische Interface 203 (GIF) des Kommunikationscontroller-Cores 840. Durch die in jedem aktiven Modul abgelegten Informationen und implementierten Logik zum selbstständigen Datentransfer kann hier von einem verteilten Routing gesprochen werden, da es keinen zentralen Knoten und keinen Kommunikationscontroller 750 gibt, der Informationen über das gesamte Netz besitzt. Durch die Verteilung der Routing-Intelligenz auf mehrere Module des Netzes, kann die Verfügbarkeit des Teilnehmers verbessert werden, da der Ausfall eines Moduls nicht notwendigerweise zu einem Zusammenbruch aller Routingaktivitäten in dem Teilnehmer führt.

Zur Erhöhung des Datendurchsatzes zwischen einzelnen Modulen kann ein sog. Crossbar Switch Interconnection Network eingesetzt werden. Dieses erlaubt das gleichzeitige Öffnen verschiedener Kommunikationskanäle. Dabei können zwei oder mehr (abhängig von der Systemkonfiguration) Master (Mikroprozessor 102 oder Kommunikationscontroller 750a, 750c mit aktiver Schnittstelle "a") einen Datentransfer zu jeweils einem weiteren Modul (Master oder Slave) aufbauen und die Daten übertragen. Gleichzeitige Zugriffe auf ein gleiches Modul werden priorisiert/ arbitriert und müssen sequenziell abgearbeitet werden. Die Signalisierung eines laufenden Tasks kann über Flags oder Semaphoren erfolgen. Die mögliche Bandbreite des Gesamtsystems steigt damit um ein Vielfaches. Latenzzeiten des Mikroprozessors 102 und Jitter der für die Dauer des Routing unterbrochenen Software-Tasks werden ebenfalls reduziert.

Zum aktiven Kopieren nach dem Empfang einer Nachricht, zeitgesteuert (nach Ablauf eines vorgegebenen Wertes des Timers 844) oder nach Triggerung durch einen anderen Kommunikationscontroller (z.B. Kommunikationscontroller 750c) mit aktivem Interface "a" oder durch den Mikroprozessor 102 (Host-CPU) steuert die Routing-Engine 830 eines bestimmten Kommunikationscontrollers (z.B. Kommunikationscontroller 750a) mit aktivem Interface "a" selbstständig nacheinander folgende Vorgänge, um eine Nachricht aus dem Botschaftsspeicher 300a des Kommunikationscontrollers 750a in einen Botschaftsspeicher 300b oder 300c eines anderen Kommunikationscontrollers 750b oder 750c oder in das Speicherelement 802 des Mikrocontrollers 800 zu transferieren:
- Sichtbarmachen des empfangenen Botschaftsobjekts in dem Ausgangspufferspeicher 202a des Kommunikationscontrollers 750a; und
- Anlegen einer Kopie des empfangenen Botschaftsobjekts in dem Eingangspufferspeicher 201b oder 201c des anderen Kommunikationscontrollers 750b oder 750c oder in einem konfigurierbaren Adressbereich des dem Mikroprozessor 102 zugeordneten Speicherelements 802 durch Schreibzugriffe über die aktive Schnittstelle 834.
- Bei Transfer in einen zweiten Kommunikationscontroller 750b oder 750c: Starten des Transfers des Botschaftsobjekts aus dem Eingangspufferspeicher 201b oder 201c in den Botschaftsspeicher 300b oder 300c des zweiten Kommunikationscontrollers 750b oder 750c.

Nach dem Empfang einer Nachricht, zeitgesteuert (nach Ablauf eines vorgegebenen Wertes des Timers 844) oder nach Triggerung durch einen anderen Kommunikationscontroller (z.B. Kommunikationscontroller 750c) mit aktivem Interface "a" oder durch den Mikroprozessor 102 (Triggerung erfolgt durch Schreiben der Konfigurafionsdaten, wie Speicherbereich und Datenmenge, in das Kontrollregister 838) steuert die Routing-Engine 830 eines bestimmten Kommunikationscontrollers (z.B. Kommunikationscontroller 750a) mit aktivem Interface "a" selbstständig nacheinander folgende Vorgänge, um eine Nachricht aus einem Botschaftsspeicher 300b oder 300c eines anderen Kommunikationscontrollers 750b oder 750c oder aus dem Speicherelement 802 des Mikrocontrollers 800 in den eigenen Botschaftsspeicher 300a zu transferieren:
- Sichtbarmachen der Daten (des Botschaftsobjektes) in dem Ausgangspufferspeicher 202b oder 202c des anderen Kommunikationscontrollers 750b oder 750c, sofern Daten aus dem anderen Kommunikationscontroller 750b oder 750c in den Kommunikationscontroller 750a übertragen werden sollen;
- Anlegen einer Kopie des Inhalts des Speicherelements 802 bzw. des Ausgangspufferspeichers 202b oder 202c des anderen Kommunikationscontrollers 750b oder 750c im eigenen Eingangspufferspeicher 201a durch Lesezugriffe über die aktive Schnittstelle "a" in einen konfigurierten Adressbereich; und
- Initiieren der Übertragung der Daten aus dem Pufferspeicher 201a in den Botschaftsspeicher 300a des Kommunikationscontrollers 750a bzw. des Kommunikationsbausteins 100a.

Durch die Verwendung der beschriebenen aktiven Schnittstelle 834 zusammen mit der Logik in Form der Routing-Engine 830 ergeben sich folgende Vorteile:
- Der Mikroprozessor 102 wird im Vergleich zu Zugriffen über einen externen DMA-Controller (vgl. Bezugszeichen 810 in Figur 15) von einer hohen Interruptlast befreit.
- Eine geringere Interruptlast ermöglicht einen geringeren Taskjitter und damit eine bessere Vorhersagbarkeit des Gesamtsystems.
- Durch Zugriffe auf Botschaftskopien im Speicherelement 802 ist eine größere Zugriffsbandbreite möglich.
- Durch die höhere Zugriffsbandbreite hat der Mikroprozessor 102 mehr Rechenzeit für andere Aufgaben zur Verfügung (Latenzzeiten des Prozessors 102 werden verringert).

## Patentansprüche

1. Teilnehmer **(900)** eines Kommunikationssystems, wobei der Teilnehmer **(900)** einen Mikroprozessor **(102),** mindestens zwei Kommunikationscontroller **(750a, 750b, 750c)** und einen Peripherie-Bus **(820)** aufweist und wobei der Mikroprozessor **(102)** über den Peripherie-Bus **(820)** mit den Kommunikationscontrollern **(750a, 750b, 750c)** in Verbindung steht und über die Kommunikationscontroller **(750a, 750b, 750c)** jeweils an eine Kommunikationsverbindung **(101a, 101b, 101c)** des Kommunikationssystems angeschlossen ist, über welche Botschaften übertragen werden, **dadurch gekennzeichnet, dass** mindestens einer der Kommunikationscontroller **(750a, 750c)** eine aktive Schnittstelle **(834),** über die der Kommunikationscontroller **(750a, 750c)** mit dem Peripherie-Bus **(820)** in Verbindung steht und über die der Kommunikationscontroller **(750a, 750c)** Daten und Befehle an andere Teilnehmer des Peripherie-Bus **(820)** aussenden kann, und eine Logik zur selbstständigen Realisierung einer Gateway-Funktionalität aufweist, und dass die Kommunikationscontroller **(750a, 750b, 750c)** jeweils einen Botschaftsspeicher **(300a, 300b, 300c)** zum Zwischenspeichern von Botschaften von der dem Kommunikationscontroller **(750a, 750b, 750c)** zugeordneten Kommunikationsverbindung **(101a, 101b, 101c)** oder für die Kommunikationsverbindung **(101a, 101b, 101c)** aufweist, wobei die Logik ein selbstständiges Routing von Daten zwischen dem Botschaftsspeicher **(300a, 300b, 300c)** eines Kommunikationscontrollers **(750a, 750b, 750c)** und dem Mikroprozessor (**102**) oder zwischen den Botschaftsspeichern **(300a, 300b, 300c)** der Kommunikationscontroller **(750a, 750b, 750c)** koordiniert und steuert.

2. Teilnehmer **(900)** nach Anspruch 1, **dadurch gekennzeichnet, dass** mindestens einer der Kommunikationscontroller **(750a, 750b, 750c)** einen Kommunikationsbaustein **(100a, 100b, 100c)** aufweist, der einen Botschaftsspeicher **(300a, 300b, 300c)** zum Zwischenspeichern von Botschaften von der dem Kommunikationscontroller **(750a, 750b, 750c)** zugeordneten Kommunikationsverbindung **(101a, 101b, 101c)** oder für die Kommunikationsverbindung **(101a, 101b, 101c)** umfasst, wobei die Logik ein selbstständiges Routing von Daten zwischen dem Botschaftsspeicher eines Kommunikationscontrollers oder dem Botschaftsspeicher **(300a, 300b, 300c)** des mindestens einen Kommunikationsbausteins **(100a, 100b, 100c)** und dem Mikroprozessor **(102)** oder zwischen den Botschaftsspeichern **(300a, 300b, 300c)** der Kommunikationscontroller **(750a, 750b, 750c)** und/oder dem Botschaftsspeicher **(300a, 300b, 300c)** des mindestens einen Kommunikationsbausteins **(100a, 100b, 100c)** koordiniert und steuert.

3. Teilnehmer **(900)** nach Anspruch 2, **dadurch gekennzeichnet, dass** jeder Kommunikationsbaustein **(100a, 100b, 100c)** mindestens einen zwischen dem Botschaftsspeicher **(300a, 300b, 300c)** und dem Peripheriebus **(820)** angeordneten Pufferspeicher, vorzugsweise mindestens einen Eingabepufferspeicher **(201a, 201b, 201c)** und mindestens einen Ausgangspufferspeicher **(202a, 202b, 202c),** aufweist, wobei die Logik ein selbstständiges Routing von Daten zwischen dem Botschaftsspeicher **(300a, 300b, 300c)** eines Kommunikationscontrollers **(750a, 750b, 750c)** oder dem mindestens einen Pufferspeicher **(201a, 201b, 201c; 202a, 202b, 202c)** des Botschaftsspeichers **(300a, 300b, 300c)** des mindestens einen Kommunikationsbausteins **(100a, 100b, 100c)** und dem Mikroprozessor **(102)** oder zwischen den Botschaftsspeichern **(300a, 300b, 300c)** der Kommunikationscontroller **(750a, 750b, 750c)** und/oder dem mindestens einen Pufferspeicher **(201a, 201b, 201c; 202a, 202b, 202c)** des Botschaftsspeichers **(300a, 300b, 300c)** des mindestens einen Kommunikationsbausteins **(100a, 100b, 100c)** koordiniert und steuert.

4. Teilnehmer **(900)** nach einem der Ansprüche 1 bis 3, **dadurch gekennzeichnet, dass** die Logik in dem Kommunikationscontroller **(750a, 750c)** eine Zustandsmaschine umfasst.

5. Teilnehmer **(900)** nach Anspruch 4, **dadurch gekennzeichnet, dass** die Zustandsmaschine fest verdrahtet ist.

6. Teilnehmer **(900)** nach Anspruch 4 oder 5, **dadurch gekennzeichnet, dass** jeder der Kommunikationscontroller **(750a, 750c),** der eine aktive Schnittstelle **(834)** und eine Logik hat, einen Arbiter **(836)** aufweist, der konkurrierende Zugriffe des Mikroprozessors **(102)** und der Routing-Engine **(830)** auf einen Botschaftsspeicher **(300a, 300c)** des Kommunikationscontrollers **(750a, 750c)** oder auf einen Botschaftsspeicher **(300a, 300c)** eines Kommunikationsbausteins **(100a, 100c)** oder auf mindestens einen Pufferspeicher **(201a, 201c; 202a, 202c)** eines Botschaftsspeichers **(300a, 300c)** eines Kommunikationsbausteins **(100a, 100c)** arbitriert.

7. Teilnehmer **(900)** nach einem der Ansprüche 1 bis 6, **dadurch gekennzeichnet, dass** jeder der Kommunikationscontroller **(750a, 750c),** der eine aktive Schnittstelle **(834)** und eine Logik hat, Kontroll- und/oder Statusregister **(838)** aufweist, auf welche der Mikroprozessor **(102)** zur Konfiguration, Ansteuerung und/oder Überwachung der Gateway-Funktionalität Zugriff hat.

8. Teilnehmer **(900)** nach einem der Ansprüche 1 bis 7, **dadurch gekennzeichnet, dass** jeder der Kommunikationscontroller **(750a, 750c),** der eine aktiven Schnittstelle **(834)** und eine Logik hat, einen Routing-Speicher **(844)** aufweist, auf welchen der Mikroprozessor **(102)** zur Ansteuerung und/oder Überwachung der Gateway-Funktionalität Zugriff hat.

9. Teilnehmer **(900)** nach einem der Ansprüche 1 bis 8, **dadurch gekennzeichnet, dass** der Teilnehmer **(900)** Bestandteil eines FlexRay-Kommunikationssytems ist, in welchem eine Datenübertragung zwischen dem Teilnehmer **(900)** und anderen an die FlexRay-Kommunikationsverbindung **(101)** angeschlossenen FlexRay-Teilnehmern nach dem FlexRay-Protokoll erfolgt.

10. Verfahren zur Realisierung einer Gateway-Funktionalität innerhalb eines Teilnehmers **(900)** eines Kommunikationssystems, wobei der Teilnehmer **(900)** einen Mikroprozessor **(102),** mindestens zwei Kommunikationscontroller **(750a, 750b; 750c)** und einen Peripherie-Bus **(820)** aufweist und wobei die Kommunikationscontroller **(750a, 750b, 750c)** einerseits über den Peripherie-Bus **(820)** mit dem Mikroprozessor **(102)** in Verbindung stehen und andererseits jeweils an eine Kommunikationsverbindung **(101a, 101b, 101c)** des Kommunikationssystems angeschlossen sind, über welche Botschaften übertragen werden, **dadurch gekennzeichnet, dass** mindestens einer der Kommunikationscontroller **(750a, 750c)** eine aktive Schnittstelle **(834)** aufweist, über die der Kommunikationscontroller **(750a, 750c)** mit dem Peripherie-Bus **(820)** in Verbindung steht und über die der Kommunikationscontroller **(750a, 750c)** Daten und Befehle an andere Teilnehmer des Peripherie-Bus **(820)** aussenden kann, und dass die Gateway-Funktionalität durch eine Logik in dem mindestens einen Kommunikationscontroller **(750a, 750c)** realisiert wird, wobei die Logik ein selbstständiges Routing von Daten zwischen einem Botschaftsspeicher **(300a, 300b, 300c)** des Kommunikationscontrollers **(750a, 750b, 750c)** und dem Mikroprozessor **(102)** oder zwischen Botschaftsspeichern **(300a, 300b, 300c)** der Kommunikationscontroller **(750a, 750b, 750c)** koordiniert und steuert.

11. Verfahren nach Anspruch 10, **dadurch gekennzeichnet, dass** im Rahmen der Gateway-Funktionalität Interrupts ausgelöst und verarbeitet werden, Botschaften fragmentiert und defragmentiert werden, Botschaften zwischen Kommunikationscontrollern **(750a, 750b, 750c)** des Teilnehmers **(900)** und/oder Botschaften zwischen einem der Kommunikationscontroller **(750a, 750b, 750c)** und dem Mikroprozessor **(102)** ausgetauscht werden.

12. Verfahren nach Anspruch 10 oder 11, **dadurch gekennzeichnet, dass** der Mikroprozessor **(102)** Kontroll- und Statusinformationen in einem Kontroll-und/oder Statusregister **(838)** des mindestens einen Kommunikationscontrollers **(750a, 750c)** ablegt und so die Gateway-Funktionalität konfiguriert, gesteuert und/oder überwacht wird.

13. Verfahren nach einem der Ansprüche 10 bis 12, **dadurch gekennzeichnet, dass** der Mikroprozessor **(102)** Routing-Informationen in einem Routing-Speicher **(842)** des mindestens einen Kommunikationscontrollers **(750a, 750c)** ablegt und so die Gateway-Funktionalität gesteuert und/oder überwacht wird.

14. Verfahren nach einem der Ansprüche 10 bis 13, **dadurch gekennzeichnet, dass** die Logik in dem mindestens einen Kommunikationscontroller **(750a, 750c)** eine Routing-Engine **(830)** umfasst, wobei konkurrierende Zugriffe des Mikroprozessors **(102)** und der Routing-Engine **(830)** auf den Botschaftsspeicher **(300a, 300c)** des Kommunikationscontrollers **(750a, 750c)** oder auf einen Botschaftsspeicher **(300a, 300c)** eines Kommunikationsbausteins **(100a, 100c)** oder auf mindestens einen Pufferspeicher **(201a, 201c; 202a, 202c)** des Botschaftsspeichers **(300a, 300c)** des Kommunikationsbausteins **(100a, 100c)** arbitriert werden.

15. Verfahren nach einem der Ansprüche 10 bis 14, **dadurch gekennzeichnet, dass** zum aktiven Kopieren von Daten in einen Botschaftsspeicher **(300b, 300c)** eines anderen Kommunikationscontroller **(750b, 750c)** von der Logik des mindestens einen Kommunikationscontrollers **(750a)** selbstständig folgende Schritte veranlasst und gesteuert werden: - Sichtbarmachen der empfangenen Daten in einem Pufferspeicher **(202a)** des mindestens einen Kommunikationscontrollers **(750a); -** Anlegen einer Kopie der empfangenen Daten in einem konfigurierbaren Adressbereich eines dem Mikroprozessor **(102)** zugeordneten Speicherelements **(802)** oder in einem Pufferspeicher **(201b, 201c)** eines anderen Kommunikationscontrollers **(750b, 750c)** durch Schreibzugriffe über die aktive Schnittstelle **(834);** und - beim Anlegen einer Kopie der Daten in dem Pufferspeicher **(201b, 201c)** des anderen Kommunikationscontrollers **(750b, 750c),** Starten eines Transfers der abgelegten Daten aus dem Pufferspeicher **(201b, 201c)** in einen Botschaftsspeicher **(300b, 300c)** des anderen Kommunikationscontrollers **(750b, 750c).**

16. Verfahren nach einem der Ansprüche 10 bis 15, **dadurch gekennzeichnet, dass** zum aktiven Kopieren von Daten aus einem Botschaftsspeicher **(300b, 300c)** eines anderen Kommunikationscontrollers **(750b, 750c)** von der Logik des mindestens einen Kommunikationscontrollers **(750a)** selbstständig folgende Schritte veranlasst und gesteuert werden: - Sichtbarmachen der Daten in einem Pufferspeicher **(202b, 202c)** des anderen Kommunikationscontrollers **(750b, 750c); -** Anlegen einer Kopie des Inhalts eines dem Mikroprozessor **(102)** zugeordneten Speicherelements **(802)** oder des Pufferspeichers **(202b, 202c)** des anderen Kommunikationscontrollers **(750b, 750c)** in einem konfigurierbaren Adressbereich mindestens eines Pufferspeichers **(201a)** des Kommunikationscontrollers **(750a)** durch Lesezugriffe über die aktive Schnittstelle **(834);** und - Starten eines Transfers der abgelegten Daten aus dem mindestens einen Pufferspeicher **(201a)** in einen Botschaftsspeicher **(300a)** des Kommunikationsbausteins **(100a)** des Kommunikationscontrollers **(750a).**

17. Verfahren nach Anspruch 15 oder 16, **dadurch gekennzeichnet, dass** das Verfahren zeitgesteuert, durch den Empfang von Daten, insbesondere einer Nachricht, durch Triggerung durch einen Kommunikationscontroller **(750a, 750c)** mit einer aktiven Schnittstelle **(834),** oder durch Triggerung durch den Mikroprozessor **(102)** ausgelöst wird.

## Claims

1. Subscriber (900) in a communication system, wherein the subscriber (900) has a microprocessor (102), at least two communication controllers (750a, 750b, 750c) and a peripheral bus (820) and wherein the microprocessor (102) is in contact with the communication controllers (750a, 750b, 750c) via the peripheral bus (820) and is connected via the communication controllers (750a, 750b, 750c) to a respective communication link (101a, 101b, 101c) of the communication system, which communication link is used to transmit messages, **characterized in that** at least one of the communication controllers (750a, 750c) has an active interface (834), via which the communication controller (750a, 750c) is in contact with the peripheral bus (820) and via which the communication controller (750a, 750c) can send data and commands to other subscribers on the peripheral bus (820), and a logic unit for the autonomous implementation of a gateway functionality, and **in that** the communication controllers (750a, 750b, 750c) respectively have a message memory (300a, 300b, 300c) for buffer-storing messages from the communication link (101a, 101b, 101c) associated with the communication controller (750a, 750b, 750c) or for the communication link (101a, 101b, 101c), wherein the logic unit coordinates and controls autonomous routing of data between the message memory (300a, 300b, 300c) of a communication controller (750a, 750b, 750c) and the microprocessor (102) or between the message memories (300a, 300b, 300c) of the communication controllers (750a, 750b, 750c).

2. Subscriber (900) according to Claim 1, **characterized in that** at least one of the communication controllers (750a, 750b, 750c) has a communication chip (100a, 100b, 100c) which comprises a message memory (300a, 300b, 300c) for buffer-storing messages from the communication link (101a, 101b, 101c) associated with the communication controller (750a, 750b, 750c) or for the communication link (101a, 101b, 101c), wherein the logic unit coordinates and controls autonomous routing of data between the message memory of a communication controller or the message memory (300a, 300b, 300c) of the at least one communication chip (100a, 100b, 100c) and the microprocessor (102) or between the message memories (300a, 300b, 300c) of the communication controllers (750a, 750b, 750c) and/or the message memory (300a, 300b, 300c) of the at least one communication chip (100a, 100b, 100c).

3. Subscriber (900) according to Claim 2, **characterized in that** each communication chip (100a, 100b, 100c) has at least one buffer store arranged between the message memory (300a, 300b, 300c) and the peripheral bus (820), preferably at least one input buffer store (201a, 201b, 201c) and at least one output buffer store (202a, 202b, 202c), wherein the logic unit coordinates and controls autonomous routing of data between the message memory (300a, 300b, 300c) of a communication controller (750a, 750b, 750c) or the at least one buffer store (201a, 201b, 201c; 202a, 202b, 202c) of the message memory (300a, 300b, 300c) of the at least one communication chip (100a, 100b, 100c) and the microprocessor (102) or between the message memories (300a, 300b, 300c) of the communication controllers (750a, 750b, 750c) and/or the at least one buffer store (201a, 201b, 201c; 202a, 202b, 202c) of the message memory (300a, 300b, 300c) of the at least one communication chip (100a, 100b, 100c).

4. Subscriber (900) according to one of Claims 1 to 3, **characterized in that** the logic unit in the communication controller (750a, 750c) comprises a state machine.

5. Subscriber (900) according to Claim 4, **characterized in that** the state machine is hardwired.

6. Subscriber (900) according to Claim 4 or 5, **characterized in that** each of the communication controllers (750a, 750c), which has an active interface (834) and a logic unit, has an arbiter (836) which arbitrates competing access operations by the microprocessor (102) and the routing engine (830) to a message memory (300a, 300c) of the communication controller (750a, 750c) or to a message memory (300a, 300c) of a communication chip (100a, 100c) or to at least one buffer store (201a, 201c; 202a, 202c) of a message memory (300a, 300c) of a communication chip (100a, 100c).

7. Subscriber (900) according to one of Claims 1 to 6, **characterized in that** each of the communication controllers (750a, 750c), which has an active interface (834) and a logic unit, has inspection and/or status registers (838) to which the microprocessor (102) has access for the purpose of configuration, actuation and/or monitoring of the gateway functionality.

8. Subscriber (900) according to one of Claims 1 to 7, **characterized in that** each of the communication controllers (750a, 750c), which has an active interface (834) and a logic unit, has a routing memory (844) to which the microprocessor (102) has access for the purpose of actuation and/or monitoring of the gateway functionality.

9. Subscriber (900) according to one of Claims 1 to 8, **characterized in that** the subscriber (900) is part of a FlexRay communication system, in which data transmission between the subscriber (900) and other FlexRay subscribers connected to the FlexRay communication link (101) is performed on the basis of the FlexRay protocol.

10. Method for the implementation of a gateway functionality within a subscriber (900) in a communication system, wherein the subscriber (900) has a microprocessor (102), at least two communication controllers (750a, 750b; 750c) and a peripheral bus (820) and wherein the communication controllers (750a, 750b, 750c) are firstly in contact with the microprocessor (102) via the peripheral bus (820) and are secondly connected to a respective communication link (101a, 101b, 101c) of the communication system, which communication link is used to transmit messages, **characterized in that** at least one of the communication controllers (750a, 750c) has an active interface (834), via which the communication controller (750a, 750c) is in contact with the peripheral bus (820) and via which the communication controller (750a, 750c) can send data and commands to other subscribers on the peripheral bus (820), and **in that** gateway functionality is implemented by a logic unit in the at least one communication controller (750a, 750c), wherein the logic unit coordinates and controls autonomous routing of data between a message memory (300a, 300b, 300c) of the communication controller (750a, 750b, 750c) and the microprocessor (102) or between message memories (300a, 300b, 300c) of the communication controllers (750a, 750b, 750c).

11. Method according to Claim 10, **characterized in that** the gateway functionality involves interrupts being triggered and processed, messages being fragmented and defragmented, messages being interchanged between communication controllers (750a, 750b, 750c) of the subscriber (900) and/or messages being interchanged between one of the communication controllers (750a, 750b, 750c) and the microprocessor (102).

12. Method according to Claim 10 or 11, **characterized in that** the microprocessor (102) stores inspection and status information in an inspection and/or status register (838) of the at least one communication controller (750a, 750c) and in this way the gateway functionality is configured, controlled and/or monitored.

13. Method according to one of Claims 10 to 12, **characterized in that** the microprocessor (102) stores routing information in a routing memory (842) of the at least one communication controller (750a, 750c) and in this way the gateway functionality is controlled and/or monitored.

14. Method according to one of Claims 10 to 13, **characterized in that** the logic unit in the at least one communication controller (750a, 750c) comprises a routing engine (830), wherein competing access operations by the microprocessor (102) and the routing engine (830) to the message memory (300a, 300c) of the communication controller (750a, 750c) or to a message memory (300a, 300c) of a communication chip (100a, 100c) or to at least one buffer store (201a, 201c; 202a, 202c) of the message memory (300a, 300c) of the communication chip (100a, 100c) are arbitrated.

15. Method according to one of Claims 10 to 14, **characterized in that** the active copying of data to a message memory (300b, 300c) of another communication controller (750b, 750c) involves the logic unit of the at least one communication controller (750a) autonomously prompting and controlling the following steps: - the received data are rendered visible in a buffer store (202a) of the at least one communication controller (750a); - a copy of the received data is created in a configurable address range of a memory element (802) associated with the microprocessor (102) or in a buffer store (201b, 201c) of another communication controller (750b, 750c) by means of write access operations via the active interface (834); and - when a copy of the data is created in the buffer store (201b, 201c) of the other communication controller (750b, 750c), transfer of the stored data from the buffer store (201b, 201c) to a message memory (300b, 300c) of the other communication controller (750b, 750c) is started.

16. Method according to one of Claims 10 to 15, **characterized in that** the active copying of data from a message memory (300b, 300c) of another communication controller (750b, 750c) involves the logic unit of the at least one communication controller (750a) autonomously prompting and controlling the following steps: - the data are rendered visible in a buffer store (202b, 202c) of the other communication controller (750b, 750c); - a copy of the content of a memory element (802) associated with the microprocessor (102) or of the buffer store (202b, 202c) of the other communication controller (750b, 750c) is created in a configurable address range of at least one buffer store (201a) of the communication controller (750a) by means of read access operations via the active interface (834); and - transfer of the stored data from the at least one buffer store (201a) to a message memory (300a) of the communication chip (100a) of the communication controller (750a) is started.

17. Method according to Claim 15 or 16, **characterized in that** the method is initiated under time control, by
the reception of data, particularly of a message, by triggering by a communication controller (750a, 750c) with an active interface (834), or by triggering by the microprocessor (102).

## Revendications

1. Terminal (900) d'un système de communication, le terminal (900) présentant un microprocesseur (102), au moins deux contrôleurs de communication (750a, 750b, 750c) et un bus périphérique (820) et le microprocesseur (102) étant en liaison avec les contrôleurs de communication (750a, 750b, 750c) par le biais du bus périphérique (820) et étant à chaque fois raccordé par le biais des contrôleurs de communication (750a, 750b, 750c) à une liaison de communication (101a, 101b, 101c) du système de communication par le biais de laquelle sont transmis des messages, **caractérisé en ce qu'**au moins l'un des contrôleurs de communication (750a, 750c) présente une interface active (834), par le biais de laquelle le contrôleur de communication (750a, 750c) est en liaison avec le bus périphérique (820) et par le biais de laquelle le contrôleur de communication (750a, 750c) peut envoyer des données et des instructions à d'autres terminaux du bus périphérique (820), ainsi qu'une logique pour la réalisation autonome d'une fonctionnalité de passerelle, et que les contrôleurs de communication (750a, 750b, 750c) présentent respectivement une mémoire de message (300a, 300b, 300c) pour la mémorisation temporaire de messages de la liaison de communication (101a, 101b, 101c) associée au contrôleur de communication (750a, 750b, 750c) ou pour la liaison de communication (101a, 101b, 101c), la logique coordonnant et commandant un routage autonome de données entre la mémoire de message (300a, 300b, 300c) d'un contrôleur de communication (750a, 750b, 750c) et le microprocesseur (102) ou entre les mémoires de message (300a, 300b, 300c) des contrôleurs de communication (750a, 750b, 750c).

2. Terminal (900) selon la revendication 1, **caractérisé en ce qu'**au moins l'un des contrôleurs de communication (750a, 750b, 750c) présente un composant de communication (100a, 100b, 100c), lequel comprend une mémoire de message (300a, 300b, 300c) pour la mémorisation temporaire de messages de la liaison de communication (101a, 101b, 101c) associée au contrôleur de communication (750a, 750b, 750c) ou pour la liaison de communication (101a, 101b, 101c), la logique coordonnant et commandant un routage autonome de données entre la mémoire de message d'un contrôleur de communication ou la mémoire de message (300a, 300b, 300c) de l'au moins un composant de communication (100a, 100b, 100c) et le microprocesseur (102) ou entre les mémoires de message (300a, 300b, 300c) des contrôleurs de communication (750a, 750b, 750c) et/ou la mémoire de message (300a, 300b, 300c) de l'au moins un composant de communication (100a, 100b, 100c).

3. Terminal (900) selon la revendication 2, **caractérisé en ce que** chaque composant de communication (100a, 100b, 100c) présente au moins une mémoire tampon disposée entre la mémoire de message (300a, 300b, 300c) et le bus périphérique (820), de préférence au moins une mémoire tampon de saisie (201a, 201b, 201c) et au moins une mémoire tampon de sortie (202a, 202b, 202c), la logique coordonnant et commandant un routage autonome de données entre la mémoire de message (300a, 300b, 300c) d'un contrôleur de communication (750a, 750b, 750c) ou l'au moins une mémoire tampon (201a, 201b, 201c; 202a, 202b, 202c) de la mémoire de message (300a, 300b, 300c) de l'au moins un composant de communication (100a, 100b, 100c) et le microprocesseur (102) ou entre les mémoires de message (300a, 300b, 300c) des contrôleurs de communication (750a, 750b, 750c) et/ou l'au moins une mémoire tampon (201a, 201b, 201c; 202a, 202b, 202c) de la mémoire de message (300a, 300b, 300c) de l'au moins un composant de communication (100a, 100b, 100c).

4. Terminal (900) selon l'une des revendications 1 à 3, **caractérisé en ce que** la logique dans le contrôleur de communication (750a, 750c) comprend une machine d'état.

5. Terminal (900) selon la revendication 4, **caractérisé en ce que** la machine d'état est câblée à demeure.

6. Terminal (900) selon la revendication 4 ou 5, **caractérisé en ce que** chacun des contrôleurs de communication (750a, 750c) qui possède une interface active (834) et une logique présente un arbitre (836) qui arbitre les accès simultanés du microprocesseur (102) et du moteur de routage (830) à une mémoire de message (300a, 300c) du contrôleur de communication (750a, 750c) ou à une mémoire de message (300a, 300c) d'un composant de communication (100a, 100c) ou à au moins une mémoire tampon (201a, 201c; 202a, 202c) d'une mémoire de message (300a, 300c) d'un composant de communication (100a, 100c).

7. Terminal (900) selon l'une des revendications 1 à 6, **caractérisé en ce que** chacun des contrôleurs de communication (750a, 750c) qui possède une interface active (834) et une logique présente des registres de contrôle et/ou d'état (838) auxquels a accès le microprocesseur (102) pour la configuration, la commande et/ou la surveillance de la fonctionnalité de passerelle.

8. Terminal (900) selon l'une des revendications 1 à 7, **caractérisé en ce que** chacun des contrôleurs de communication (750a, 750c) qui possède une interface active (834) et une logique présente une mémoire de routage (844) à laquelle a accès le microprocesseur (102) pour la commande et/ou la surveillance de la fonctionnalité de passerelle.

9. Terminal (900) selon l'une des revendications 1 à 8, **caractérisé en ce que** le terminal (900) fait partie d'un système de communication FlexRay dans lequel a lieu une transmission de données entre les terminaux (900) et d'autres terminaux FlexRay connectés à la liaison de communication FlexRay (101) selon le protocole FlexRay.

10. Procédé de réalisation d'une fonctionnalité de passerelle à l'intérieur d'un terminal (900) d'un système de communication, le terminal (900) présentant un microprocesseur (102), au moins deux contrôleurs de communication (750a, 750b, 750c) et un bus périphérique (820) et les contrôleurs de communication (750a, 750b, 750c) étant reliés d'un côté avec le microprocesseur (102) par le biais du bus périphérique (820) et de l'autre côté à chaque fois avec une liaison de communication (101a, 101b, 101c) du système de communication, par le biais de laquelle sont transmis des messages, **caractérisé en ce qu'**au moins l'un des contrôleurs de communication (750a, 750c) présente une interface active (834), par le biais de laquelle le contrôleur de communication (750a, 750c) est en liaison avec le bus périphérique (820) et par le biais de laquelle le contrôleur de communication (750a, 750c) peut envoyer des données et des instructions à d'autres terminaux du bus périphérique (820), et que la fonctionnalité de passerelle est réalisée par une logique dans l'au moins un contrôleur de communication (750a, 750c), la logique coordonnant et commandant un routage autonome de données entre une mémoire de message (300a, 300b, 300c) du contrôleur de communication (750a, 750b, 750c) et le microprocesseur (102) ou entre les mémoires de message (300a, 300b, 300c) des contrôleurs de communication (750a, 750b, 750c).

11. Procédé selon la revendication 10, **caractérisé en ce que** dans le cadre de la fonctionnalité de passerelle des interruptions sont déclenchées et traitées, des messages sont fragmentés et défragmentés, des messages sont échangés entre des contrôleurs de communication (750a, 750b, 750c) du terminal (900) et/ou des messages sont échangés entre l'un des contrôleurs de communication (750a, 750b, 750c) et le microprocesseur (102).

12. Procédé selon la revendication 10 ou 11, **caractérisé en ce que** le microprocesseur (102) stocke des informations de contrôle et d'état dans un registre de contrôle et/ou d'état (838) de l'au moins un contrôleur de communication (750a, 750c) et la fonctionnalité de passerelle est ainsi configurée, commandée et/ou surveillée.

13. Procédé selon l'une des revendications 10 à 12, **caractérisé en ce que** le microprocesseur (102) stocke des informations de routage dans une mémoire de routage (842) de l'au moins un contrôleur de communication (750a, 750c) et la fonctionnalité de passerelle est ainsi commandée et/ou surveillée.

14. Procédé selon l'une des revendications 10 à 13, **caractérisé en ce que** la logique dans l'au moins un contrôleur de communication (750a, 750c) comprend un moteur de routage (830), des accès simultanés du microprocesseur (102) et du moteur de routage (830) à la mémoire de message (300a, 300c) du contrôleur de communication (750a, 750c) ou à une mémoire de message (300a, 300c) d'un composant de communication (100a, 100c) ou à au moins une mémoire tampon (201a, 201c; 202a, 202c) de la mémoire de message (300a, 300c) du composant de communication (100a, 100c) étant arbitrés.

15. Procédé selon l'une des revendications 10 à 14, **caractérisé en ce que** pour la copie active de données dans une mémoire de message (300b, 300c) d'un autre contrôleur de communication (750b, 750c), les étapes suivantes sont ordonnées et commandées de manière autonome par la logique de l'au moins un contrôleur de communication (750a) : - représentation visible des données reçues dans une mémoire tampon (202a) de l'au moins un contrôleur de communication (750a) ; application d'une copie des données reçues dans une zone d'adresse configurable d'un élément de mémoire (802) associé au microprocesseur (102) ou dans une mémoire tampon (201b, 201c) d'un autre contrôleur de communication (750b, 750c) par des accès en écriture par le biais de l'interface active (834) ; et - lors de l'application d'une copie des données dans la mémoire tampon (201b, 201c) de l'autre contrôleur de communication (750b, 750c), démarrage d'un transfert des données stockées depuis la mémoire tampon (201b, 201c) dans une mémoire de message (300b, 300c) de l'autre contrôleur de communication (750b, 750c).

16. Procédé selon l'une des revendications 10 à 15, **caractérisé en ce que** pour la copie active de données d'une mémoire de message (300b, 300c) d'un autre contrôleur de communication (750b, 750c), les étapes suivantes sont ordonnées et commandées de manière autonome par la logique de l'au moins un contrôleur de communication (750a) : - représentation visible des données dans une mémoire tampon (202b, 202c) de l'autre contrôleur de communication (750b, 750c) ; application d'une copie du contenu d'un élément de mémoire (802) associé au microprocesseur (102) ou de la mémoire tampon (202b, 202c) de l'autre contrôleur de communication (750b, 750c) dans une zone d'adresse configurable d'au moins une mémoire tampon (201a) du contrôleur de communication (750a) par des accès en écriture par le biais de l'interface active (834) ; et - démarrage d'un transfert des données stockées depuis l'au moins une mémoire tampon (201a) dans une mémoire de message (300a) du composant de communication (100a) du contrôleur de communication (750a).

17. Procédé selon la revendication 15 ou 16, **caractérisé en ce que** le procédé est amorcé de manière commandée dans le temps par la réception de données, notamment d'un message, par un déclenchement par un contrôleur de communication (750a, 750c) avec une interface active (834) ou par déclenchement par le microprocesseur (102).
